# EUROPEAN PATENT SPECIFICATION

(11) **EP 4 193 184 B1**
(45) Date of publication and mention of the grant of the patent: **30.10.2024**
(21) Application number: 21763180.3
(22) Date of filing: 04.08.2021
(51) Int. Cl.: G01S 13/00, G01S 13/42, G01S 13/66, H04W 4/021, H04W 4/20

(54) **AIR-INTERFACE-BASED ENVIRONMENT SENSING ASSISTED BY DEVICE-EQUIPPED TARGET OBJECT**
LUFTSCHNITTSTELLENBASIERTE UMGEBUNGSERFASSUNG MIT UNTERSTÜTZUNG DURCH EIN MIT EINER VORRICHTUNG AUSGESTATTETES ZIELOBJEKT
DÉTECTION D'ENVIRONNEMENT BASÉE SUR UNE INTERFACE RADIO ASSISTÉE PAR UN OBJET CIBLE ÉQUIPÉ D'UN DISPOSITIF

(30) Priority: 07.08.2020 US 202063062900 P; 13.08.2020 US 202063065402 P
(43) Date of publication of application: 14.06.2023
(73) Proprietor: QUALCOMM INCORPORATED, San Diego, California 92121-1714 (US)
(72) Inventor: NAM, Wooseok, San Diego, California 92121-1714 (US); PARK, Sungwoo, San Diego, California 92121-1714 (US); LUO, Tao, San Diego, California 92121-1714 (US); GAAL, Peter, San Diego, California 92121-1714 (US); AKKARAKARAN, Sony, San Diego, California 92121-1714 (US)
(74) Representative: Dunlop, Hugh Christopher
(86) International application number: PCT/US2021/044556
(87) International publication number: WO 2022/031856

(56) References cited:
- EP-A1- 0 998 684
- EP-A1- 3 896 481
- WO-A1-2020/122220
- US-A1- 2014 354 464

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

5G enables the utilization of mmW RF signals for wireless communication between network nodes, such as base stations, user equipments (UEs), vehicles, factory automation machinery, and the like. However, mmW RF signals can be used for other purposes as well. For example, mmW RF signals can be used in weapons systems (e.g., as short-range fire-control radar in tanks and aircraft), security screening systems (e.g., in scanners that detect weapons and other dangerous objects carried under clothing), medicine (e.g., to treat disease by changing cell growth), and the like.

EP 3896481 A1 discloses a transmitting apparatus, comprising: a frame configuration unit configured to configure a frame conforming to orthogonal frequency-division multiple access and including a plurality of time-frequency resources, each being a resource defined by time and frequency, and a transmitter configured to transmit the frame configured by the frame configuration unit over radio waves. EP 0998684 A1 discusses a processing method using an advanced waveform for unlocked coherent and wideband bistatic radar operation. US 2014/354464 A1 discusses a method of radar deception jamming prevention using bi-static and mono-static radars.

### SUMMARY

In accordance with the present invention, there are provided a device-equipped target object as recited by claim 1, a sensing device as recited by claim 13, and a method of wireless environment sensing performed by a device-equipped target object as recited by claim 15. Preferred features are set out in the dependent claims. The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIGS. 4A and 4B illustrate different types of radar.
FIG. 5 is a graph representing a radio frequency (RF) channel impulse response over time, according to aspects of the disclosure.
FIGS. 6 to 8 illustrate example methods of wireless environment sensing, according to aspects of the disclosure.
FIG. 9 is a block diagram illustrating an example of a wireless communication system according to aspects of the disclosure.
FIG. 10 is a timing diagram according to aspects of the disclosure.
FIG. 11 is a flow chart illustrating a method of wireless communication according to aspects of the disclosure.
FIG. 12 is a flow chart illustrating another method of wireless communication according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

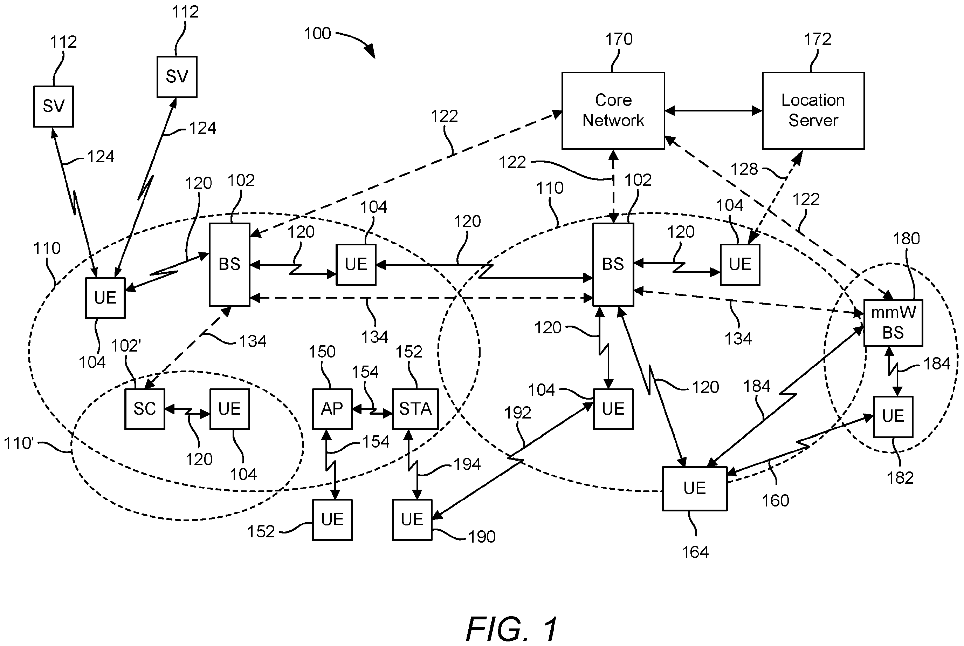

**FIG.** 1 illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5GNR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In some cases, the UE 164 and the UE 182 may be capable of sidelink communication. Sidelink-capable UEs (SL-UEs) may communicate with base stations 102 over communication links 120 using the Uu interface (i.e., the air interface between a UE and a base station). SL-UEs (e.g., UE 164, UE 182) may also communicate directly with each other over a wireless sidelink 160 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, vehicle-to-vehicle (V2V) communication, vehicle-to-everything (V2X) communication (e.g., cellular V2X (cV2X) communication, enhanced V2X (eV2X) communication, etc.), emergency rescue applications, etc. One or more of a group of SL-UEs utilizing sidelink communications may be within the geographic coverage area 110 of a base station 102. Other SL-UEs in such a group may be outside the geographic coverage area 110 of a base station 102 or be otherwise unable to receive transmissions from a base station 102. In some cases, groups of SL-UEs communicating via sidelink communications may utilize a one-to-many (1:M) system in which each SL-UE transmits to every other SL-UE in the group. In some cases, a base station 102 facilitates the scheduling of resources for sidelink communications. In other cases, sidelink communications are carried out between SL-UEs without the involvement of a base station 102.

In an aspect, the sidelink 160 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs. In an aspect, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.1 1x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Note that although FIG. 1 only illustrates two of the UEs as SL-UEs (i.e., UEs 164 and 182), any of the illustrated UEs may be SL-UEs. Further, although only UE 182 was described as being capable of beamforming, any of the illustrated UEs, including UE 164, may be capable of beamforming. Where SL-UEs are capable of beamforming, they may beamform towards each other (i.e., towards other SL-UEs), towards other UEs (e.g., UEs 104), towards base stations (e.g., base stations 102, 180, small cell 102', access point 150), etc. Thus, in some cases, UEs 164 and 182 may utilize beamforming over sidelink 160.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

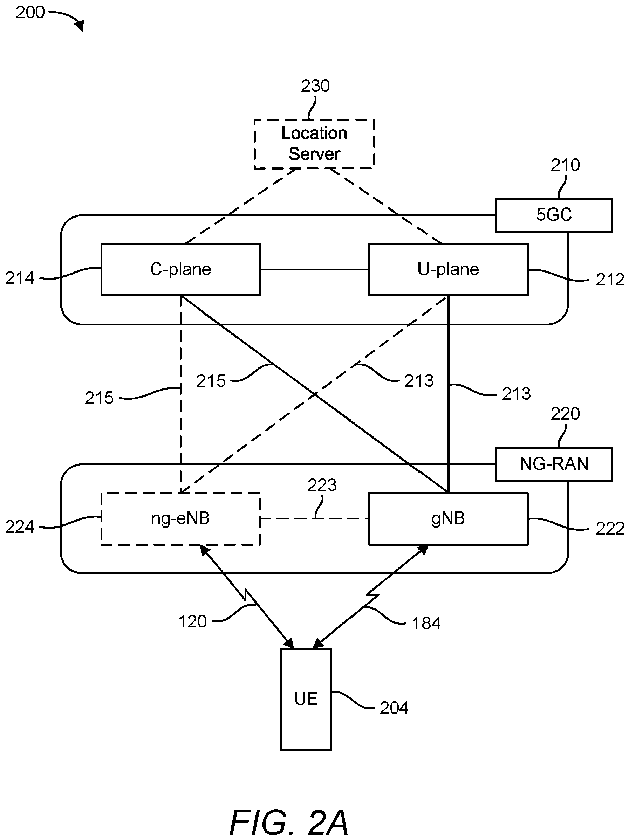

**FIG. 2A** illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

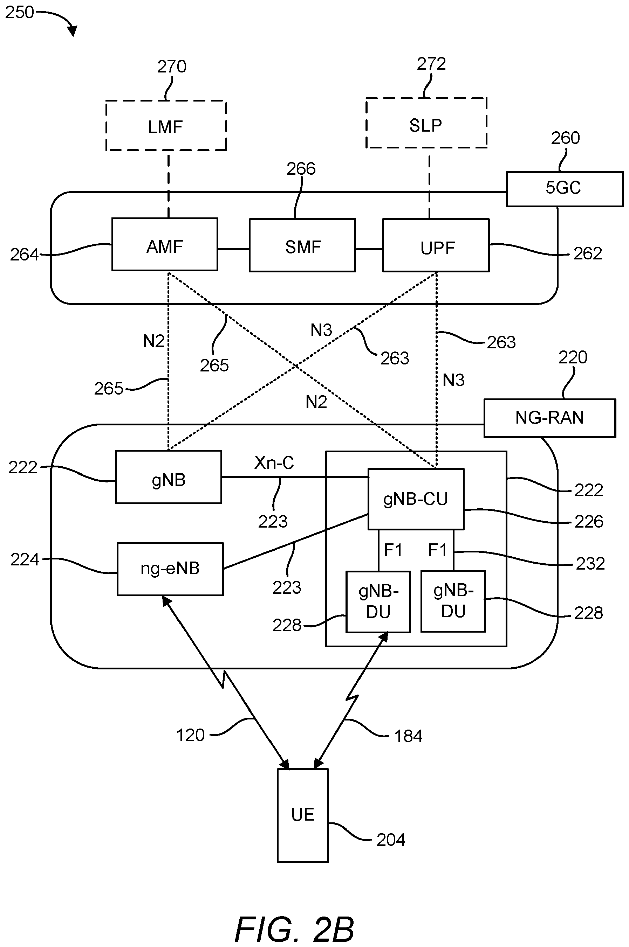

**FIG. 2B** illustrates another example wireless network structure 250. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 is divided between a gNB central unit (gNB-CU) 226 and one or more gNB distributed units (gNB-DUs) 228. The interface 232 between the gNB-CU 226 and the one or more gNB-DUs 228 is referred to as the "F 1" interface. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 hosts the radio resource control (RRC), service data adaptation protocol (SDAP), and packet data convergence protocol (PDCP) protocols of the gNB 222. A gNB-DU 228 is a logical node that hosts the radio link control (RLC), medium access control (MAC), and physical (PHY) layers of the gNB 222. Its operation is controlled by the gNB-CU 226. One gNB-DU 228 can support one or more cells, and one cell is supported by only one gNB-DU 228. Thus, a UE 204 communicates with the gNB-CU 226 via the RRC, SDAP, and PDCP layers and with a gNB-DU 228 via the RLC, MAC, and PHY layers.

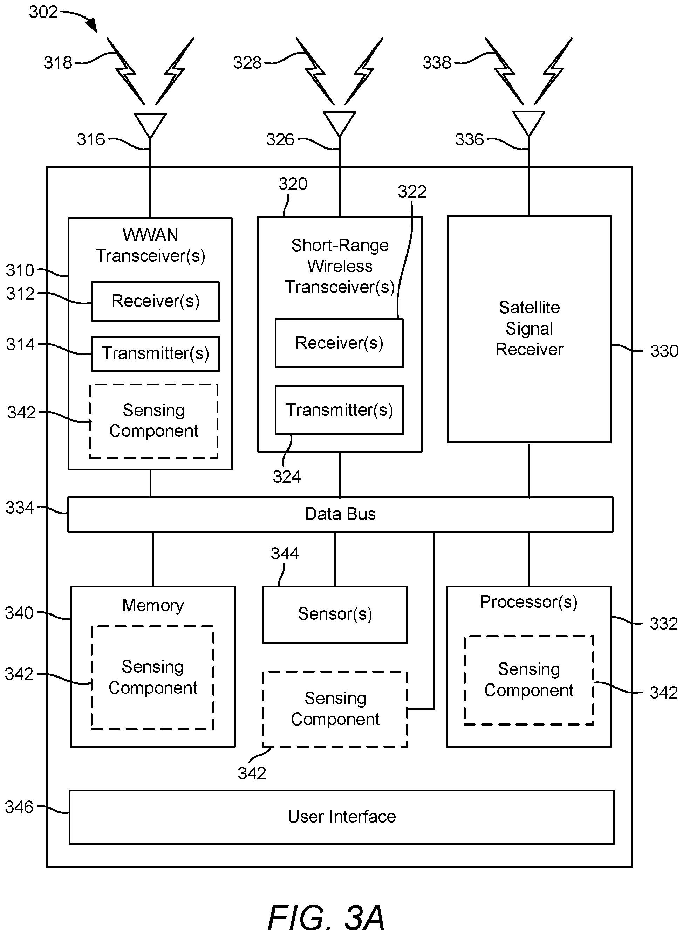

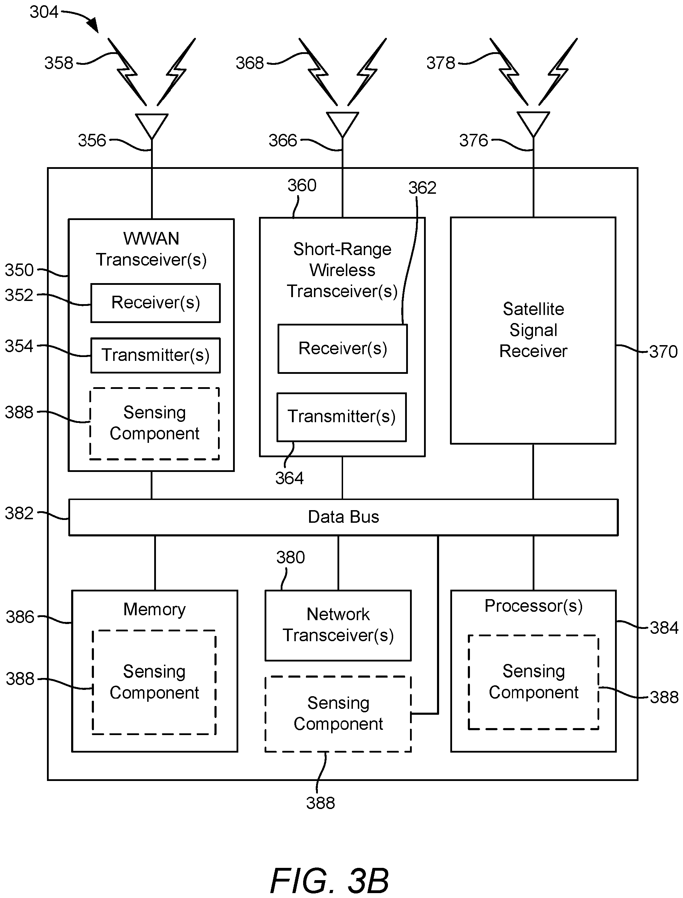

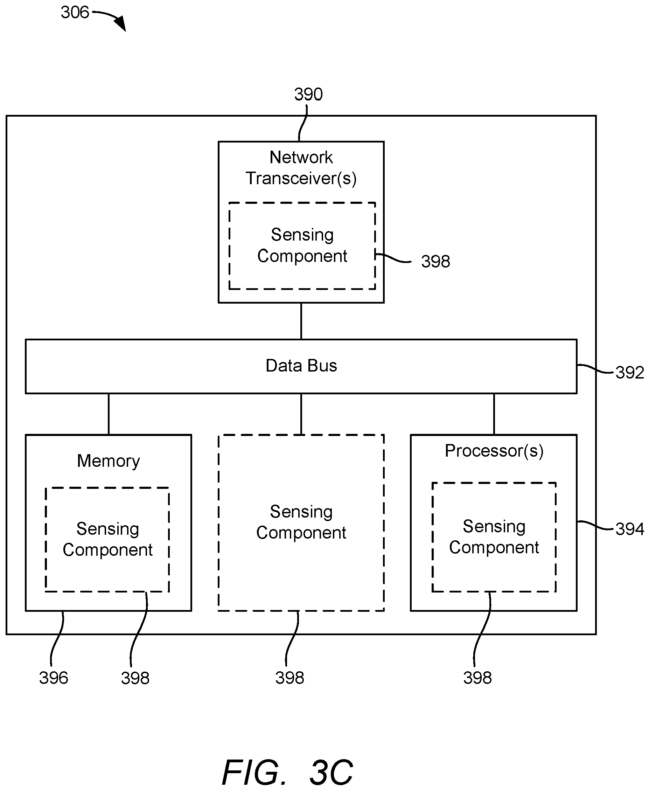

**FIGS. 3A****,** **3B****, and** **3C** illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The LTE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include sensing component 342, 388, and 398, respectively. The sensing component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the sensing component 342, 388, and 398 may be external to the processors 332, 384, and 394 (e.g., part of a modem processing system, integrated with another processing system, etc.). Alternatively, the sensing component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the sensing component 342, which may be, for example, part of the one or more WWAN transceivers 310, the memory 340, the one or more processors 332, or any combination thereof, or may be a standalone component. FIG. 3B illustrates possible locations of the sensing component 388, which may be, for example, part of the one or more WWAN transceivers 350, the memory 386, the one or more processors 384, or any combination thereof, or may be a standalone component. FIG. 3C illustrates possible locations of the sensing component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the sensing component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

Wireless communication signals (e.g., RF signals configured to carry OFDM symbols in accordance with a wireless communications standard, such as LTE, NR, etc.) transmitted between a UE and a base station can be used for environment sensing (also referred to as "RF sensing" or "radar"). Using wireless communication signals for environment sensing can be regarded as consumer-level radar with advanced detection capabilities that enable, among other things, touchless/device-free interaction with a device/system. The wireless communication signals may be cellular communication signals, such as LTE or NR signals, WLAN signals, etc. As a particular example, the wireless communication signals may be an OFDM waveform as utilized in LTE and NR. High-frequency communication signals, such as mmW RF signals, are especially beneficial to use as radar signals because the higher frequency provides, at least, more accurate range (distance) detection.

Possible use cases of RF sensing include health monitoring use cases, such as heartbeat detection, respiration rate monitoring, and the like, gesture recognition use cases, such as human activity recognition, keystroke detection, sign language recognition, and the like, contextual information acquisition use cases, such as location detection/tracking, direction finding, range estimation, and the like, and automotive radar use cases, such as smart cruise control, collision avoidance, and the like.

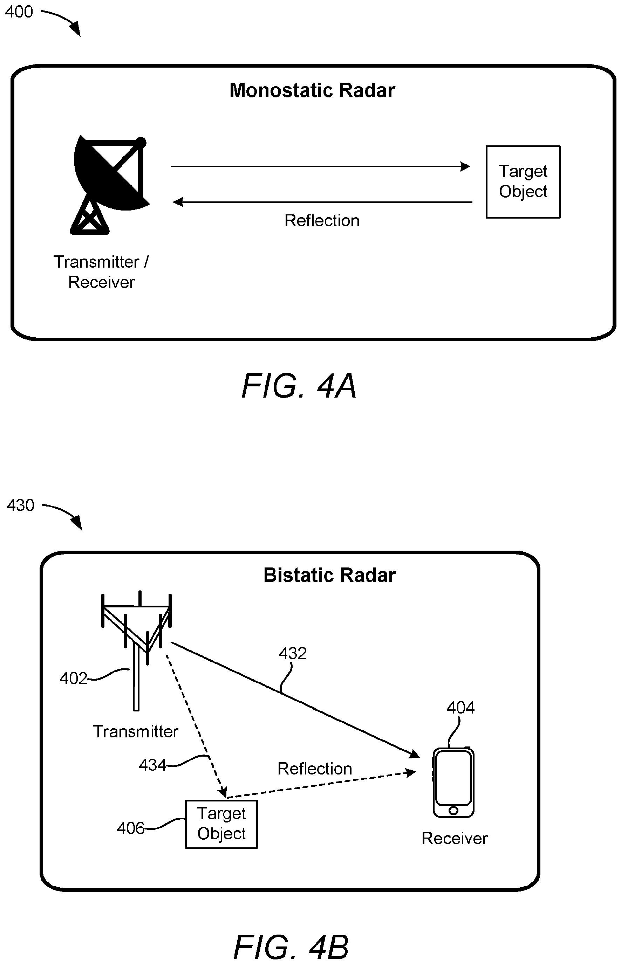

There are different types of radar, including monostatic radar and bistatic radar. **FIGS. 4A and 4B** illustrate these different types of radar. Specifically, FIG. 4A is a diagram 400 illustrating a monostatic radar scenario and FIG. 4B is a diagram 430 illustrating a bistatic radar scenario. In FIG. 4A, the transmitter (Tx) and receiver (Rx) are co-located in the same device. This is the typical use case for traditional, or conventional, radar. In FIG. 4B, the transmitter (Tx) and receiver (Rx) are not co-located, that is, they are separate devices. This is the typical use case for wireless communication-based (e.g., WiFi-based, LTE-based, NR-based) RF sensing. Note that while FIG. 4B illustrates using a downlink RF signal as the RF sensing signal 432, uplink RF signals or sidelink RF signals can also be used as RF sensing signals 432. In a downlink scenario, as shown, the transmitter is a base station and the receiver is a UE, whereas in an uplink scenario, the transmitter is a UE and the receiver is a base station.

Referring to FIG. 4B in greater detail, the transmitter device 402 transmits RF sensing signals 432 and 434 (e.g., positioning reference signals (PRS)) to the receiver device 404, but some of the RF sensing signals 434 reflect off a target object 406. The receiver device 404 (also referred to as the "sensing device") can measure the times of arrival (ToAs) of the RF sensing signals 432 received directly from the transmitter device and the ToAs of the RF sensing signals 434 reflected from the target object 406.

More specifically, as described above, a transmitter device (e.g., a base station) may transmit a single RF signal or multiple RF signals to a receiver device (e.g., a UE). However, the receiver may receive multiple RF signals corresponding to each transmitted RF signal due to the propagation characteristics of RF signals through multipath channels. Each path may be associated with a cluster of one or more channel taps. Generally, the time at which the receiver detects the first cluster of channel taps is considered the ToA of the RF signal on the line-of-site (LOS) path (i.e., the shortest path between the transmitter and the receiver). Later clusters of channel taps are considered to have reflected off objects between the transmitter and the receiver and therefore to have followed non-LOS (NLOS) paths between the transmitter and the receiver.

Thus, referring back to FIG. 4B, the RF sensing signals 432 followed the LOS path between the transmitter device 402 and the receiver device 404, and the RF sensing signals 434 followed an NLOS path between the transmitter device 402 and the receiver device 404 due to reflecting off the target object 406. The transmitter device 402 may have transmitted multiple RF sensing signals 432, 434, some of which followed the LOS path and others of which followed the NLOS path. Alternatively, the transmitter device 402 may have transmitted a single RF sensing signal in a broad enough beam that a portion of the RF sensing signal followed the LOS path (RF sensing signal 432) and a portion of the RF sensing signal followed the NLOS path (RF sensing signal 434).

Based on the ToA of the LOS path, the ToA of the NLOS path, and the speed of light, the receiver device can determine the distance to the target object(s). For example, the receiver device can calculate the distance to the target object as the difference between the ToA of the LOS path and the ToA of the NLOS path multiplied by the speed of light. In addition, if the receiver device is capable of receive beamforming, the receiver device may be able to determine the general direction to a target object as the direction (angle) of the receive beam on which the RF sensing signal following the NLOS path was received. That is, the receiver device may determine the direction to the target object as the angle of arrival (AoA) of the RF sensing signal, which is the angle of the receive beam used to receive the RF sensing signal. The receiver device may then optionally report this information to the transmitter device, its serving base station, an application server associated with the core network, an external client, a third-party application, or some other sensing entity. Alternatively, the receiver device may report the ToA measurements to the transmitter device, or other sensing entity (e.g., if the receiver device does not have the processing capability to perform the calculations itself), and the transmitter device may determine the distance and, optionally, the direction to the target object.

Note that if the RF sensing signals are uplink RF signals transmitted by a UE to a base station, the base station would perform object detection based on the uplink RF signals just like the UE does based on the downlink RF signals.

Like conventional radar, wireless communication-based radar signal can be used to estimate the range (distance), velocity (Doppler), and angle (AoA) of a target object. However, the performance (e.g., resolution and maximum values of range, velocity, and angle) may depend on the design of the reference signal.

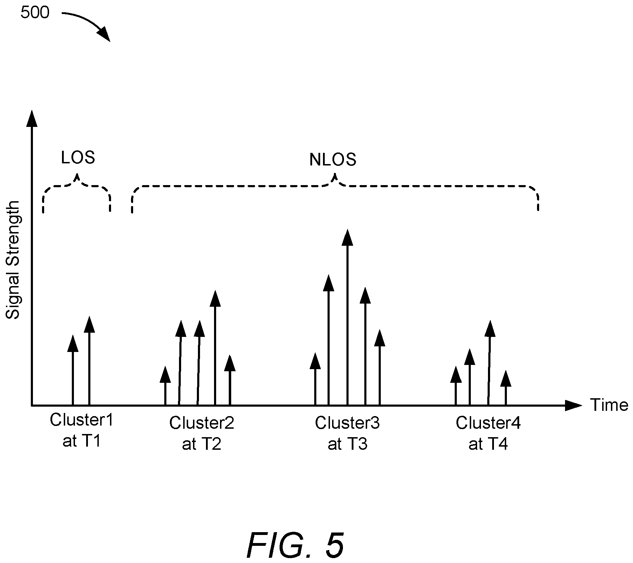

**FIG.** 5 is a graph 500 representing the channel impulse response, or channel energy response, of a multipath channel between a receiver device (e.g., any of the UEs or base stations described herein) and a transmitter device (e.g., any other of the UEs or base stations described herein), according to aspects of the disclosure. The channel impulse response represents the intensity of a radio frequency (RF) signal received through a multipath channel as a function of time delay. Thus, the horizontal axis is in units of time (e.g., milliseconds) and the vertical axis is in units of signal strength (e.g., decibels). Note that a multipath channel is a channel between a transmitter and a receiver over which an RF signal follows multiple paths, or multipaths, due to transmission of the RF signal on multiple beams and/or to the propagation characteristics of the RF signal (e.g., reflection, refraction, etc.).

In the example of FIG. 5, the receiver detects/measures multiple (four) clusters of channel taps. Each channel tap represents a multipath that an RF signal followed between the transmitter and the receiver. That is, a channel tap represents the arrival of an RF signal on a multipath. Each cluster of channel taps indicates that the corresponding multipaths followed essentially the same path. There may be different clusters due to the RF signal being transmitted on different transmit beams (and therefore at different angles), or because of the propagation characteristics of RF signals (e.g., potentially following different paths due to reflections), or both.

All of the clusters of channel taps for a given RF signal represent the multipath channel (or simply channel) between the transmitter and receiver. Under the channel illustrated in FIG. 5, the receiver receives a first cluster of two RF signals on channel taps at time T1, a second cluster of five RF signals on channel taps at time T2, a third cluster of five RF signals on channel taps at time T3, and a fourth cluster of four RF signals on channel taps at time T4. In the example of FIG. 5, because the first cluster of RF signals at time T1 arrives first, it is assumed to correspond to the RF signal transmitted on the transmit beam aligned with the line-of-sight (LOS), or the shortest, path. The third cluster at time T3 is comprised of the strongest RF signals, and may correspond to, for example, the RF signal transmitted on a transmit beam aligned with a non-line-of-sight (NLOS) path. Note that although FIG. 5 illustrates clusters of two to five channel taps, as will be appreciated, the clusters may have more or fewer than the illustrated number of channel taps.

The objects that may be detected by radar can be classified into two groups: (1) device-free target objects and (2) device-equipped target objects. Device-free targets are target objects that reflect the sensing signal(s) and either are not capable of operating according to the same RAT as the transmitter and receiver devices (e.g., non-NR devices) or are passive objects that do not communicate wirelessly. Device-equipped targets are other wireless devices capable of operating according to the same RAT as the transmitter and receiver devices, such as UEs, gNBs, wireless relays, etc. As such, a device-equipped target object could detect the RF sensing signal transmitted between the transmitter and receiver devices.

In some deployment scenarios, multiple target objects may be dispersed around a sensing device (e.g., the receiver device in a bistatic radar scenario). Some of the target objects may be device-free objects while others may be device-equipped objects. In conventional radar systems, all of the target objects may be assumed to be device-free, regardless of their actual types. However, as disclosed herein, device-equipped target objects (i.e., device-equipped target objects) may be able to assist the sensing procedure between the transmitter and receiver devices to improve performance. For example, if a device-equipped target object can respond to the RF sensing signal(s), the range and accuracy of the sensing may be improved over relying only on the reflected signal(s).

At a high level, once a device-equipped target object detects an RF sensing signal (waveform) transmitted by another device (e.g., the transmitter device), the device-equipped target object may transmit a response to the sensing device (e.g., receiver device in a bistatic radar scenario). The transmitter, sensing, and device-equipped target objects may operate according to the same RAT (e.g., NR), and may be wireless communication devices, such as base stations, UEs, relays, etc., or some combination thereof. The sensing and device-equipped target objects may be either in the RRC connected state or the RRC idle/inactive state.

There are various options for how the device-equipped target object may respond to a detected RF sensing signal. As a first option, the device-equipped target object may respond with a device-specific signal (i.e., a signal that identifies a specific device). For example, the response signal (waveform and payload) may be a function of the device-equipped target object's identifier. The identifier may be a global identity (e.g., CGI, international mobile subscriber identity (IMSI)) or a local identity within the network to which the target and sensing devices belong. Alternatively, the response signal may be a function of the sensing device's identifier (where the transmitter device can include (e.g., encode) an identifier of the sensing device in the sensing signal) or the transmitter device's identifier.

As a second option, the device-equipped target object may respond with a non-device-specific signal (i.e., a signal that does not identify a specific device). For example, the device-equipped target object may record the RF sensing signal (i.e., the analog waveform) and then echo (re-transmit with some minor modification) the sensing signal with some delay that mimics a reflection.

In an aspect, the device-equipped target object may transmit the response signal at a predetermined time after the reception of the sensing signal. The delay may be device-specific and may vary over time (e.g., as a function of the sensing/device-equipped target objects' identifiers). For example, if there are multiple device-equipped target objects, the delay can be randomized to avoid persistent interference situations. The predetermined time may be coordinated (e.g., by the serving base station, a core network entity, a sensing server, etc.) to avoid interference among different device-equipped target objects, or with other RF signals being used for communication.

The time delay should be long enough (e.g., above some threshold) to distinguish a response signal from a passive reflection path (and to provide additional interference mitigation). That is, the device-equipped target object should transmit the response signal long enough after it detects the sensing signal that the sensing device will recognize the response signal as an active response signal from a device-equipped target object rather than a passive reflection from a device-free object. In a mixed scenario (including both device-equipped and device-free target objects), the device-free objects can be detected using the associated passive reflections alone, whereas device-equipped target objects (i.e., device-equipped target objects) can be detected by their respective responses, as well as the associated passive reflections.

The behavior of a device-equipped target object may be adaptive depending on the circumstances, its configuration, its capabilities, etc. In an aspect, a device-equipped target object may decide whether or not to echo a detected RF sensing signal depending on the signal strength of the sensing signal. For example, if the signal strength (e.g., RSRP) of the sensing signal is above some threshold, indicating that it is a strong signal, then the device-equipped target object can refrain from responding and will be regarded as a passive, device-free target. However, if the signal strength (e.g., RSRP) is below a threshold, indicating a weak sensing signal, the device-equipped target object can transmit a response signal. In this way, the device-equipped target object refrains from echoing a sensing signal unnecessarily, which also decreases interference.

In an aspect, a device-equipped target object may decide whether or not to echo a detected RF sensing signal depending on the type of the sensing signal. For example, some sensing devices may not be capable of using the response from a device-equipped target object. In this case, the device-equipped target object does not need to respond to a received RF sensing signal. The waveform, resources, or the encoded payload of the sensing signal can indicate whether the device-equipped target object should respond.

In an aspect, the transmit power and/or beam (for mmWave) can also be a function of the signal strength or the type of the sensing signal (e.g., a dedicated sensing signal as opposed to another type of reference signal being used as the sensing signal). For example, if the signal strength of the sensing signal is higher, it may indicate that the device-equipped target object is closer to the transmitter device and therefore further from the sensing device, and therefore, the device-equipped target object may use a higher transmit power. As another example, the signal strength is lower, the device-equipped target object may assume that the sensing device is far away. As such, the device-equipped target object may determine to use a beam with higher beamforming gain, with a large transmission power.

There are various ways to configure the device-equipped target object-assisted sensing described herein. In an aspect, the configuration may be through RRC signaling, MAC control element (MAC-CE), downlink control information (DCI) signaling. It may also be broadcast by base stations in system information, such as SIB, positioning SIB (posSIB) (which includes a configuration of PRS, location of TRP, measurement gap, etc.), etc.). The configuration parameters may include the transmit power control and threshold parameters discussed above, the timing of active response signals (e.g., how long after receiving a sensing signal a device-equipped target object should send the response signal), potential sensing occasions (i.e., time and/or frequency occasions during which sensing signals may be transmitted), and/or the like.

In an aspect, the device-equipped target object may be a UE in the RRC connected state. In that case, the UE may send its preferred configuration for response signals directly to the sensing device or to the network (which may relay the configuration to the sensing device). Such a device-equipped target object may send its preferred configuration via UE capability signaling or UE assistance information signaling.

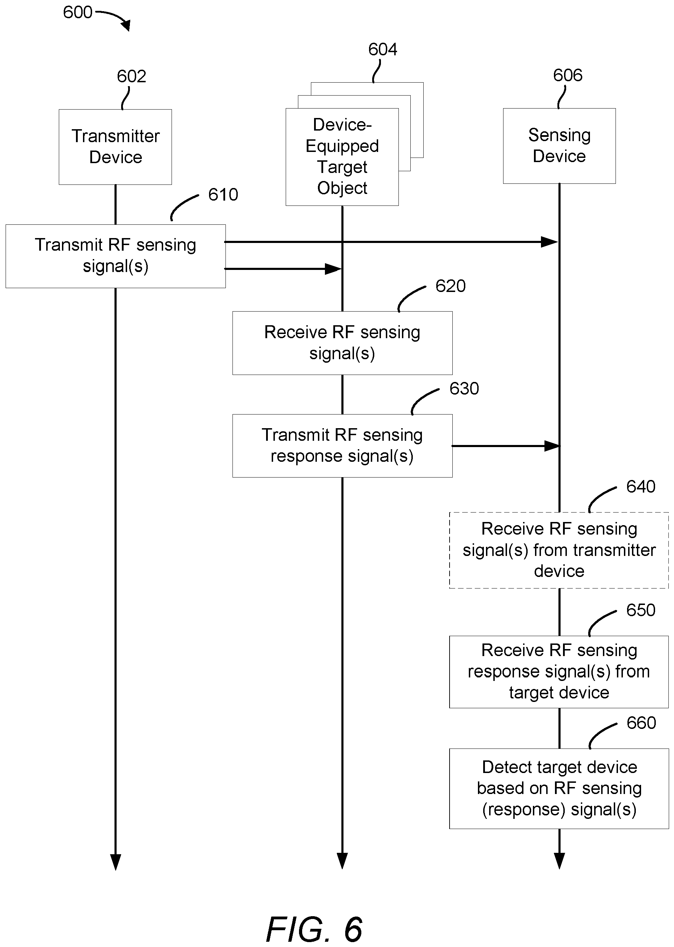

**FIG. 6** illustrates an example method 600 of wireless environment sensing, according to aspects of the disclosure. The method 600 may be performed by a transmitter device 602, one or more device-equipped target objects 604, and a sensing device 606. The transmitter device 602 may correspond to any of the base stations or UEs described herein. As a particular example, the transmitter device 602 may correspond to the transmitter device 402 illustrated in FIG. 4B. The one or more device-equipped target objects 604 may be any device-equipped target objects, such as any of the base stations or UEs described herein. As a particular example, the one or more device-equipped target objects 604 may correspond to a UE carried by the target object 406 illustrated in FIG. 4B. The sensing device 606 may correspond to any of the base stations or UEs described herein. As a particular example, the sensing device 606 may correspond to the receiver device 404 illustrated in FIG. 4B.

At 610, the transmitter device 602 transmits one or more RF sensing signals. Where the transmitter device 602 is a base station, the one or more RF sensing signals may be downlink RF sensing signals. Where the transmitter device 602 is a UE, the one or more RF sensing signals may be uplink RF sensing signals. In either case, the one or more RF sensing signals may be specifically configured as RF sensing signals, or may be other wireless communication reference signals reused as RF sensing signals (e.g., PRS).

At 620, the device-equipped target object 604 receives (detects) one or more of the RF sensing signals from the transmitter device 602. At 630, the device-equipped target object 604 transmits one or more RF sensing response signals to the sensing device 606 in response to reception of the one or more RF sensing signals from the transmitter device 602. As described herein, the one or more RF sensing response signals may be configured to mimic reflections of the RF sensing signal(s) transmitted by the transmitter device 602 or may be configured to be distinguishable from the RF sensing signal(s) transmitted by the transmitter device 602.

At 640, the sensing device 606 optionally receives one or more of the RF sensing signals transmitted by the transmitter device 602. The one or more RF sensing signals may include RF sensing signals that followed the LOS path between the transmitter device 602 and the sensing device 606 (e.g., RF sensing signal 432 in FIG. 4B) and/or RF signals that followed a NLOS path between the transmitter device 602 and the sensing device 606 (e.g., RF sensing signal 434 in FIG. 4B). One or more of the received RF sensing signals may have reflected off the device-equipped target object 604. Block 640 is optional because the sensing device 606 may be too far away from the transmitter device 602 to receive RF sensing signals from the transmitter device 602, or the path between the transmitter device 602 and the sensing device 606 may be blocked, or the like.

At 650, the sensing device 606 receives one or more of the RF sensing response signals from the device-equipped target object 604. The sensing device 606 can measure properties (e.g., ToA, RSRP, AoA) of the one or more RF sensing response signals from the device-equipped target object 604 to detect, at 660, the presence of the device-equipped target object 604 in the environment of the sensing device 606, as described herein. Note that the "environment" of the sensing device 606 refers to the area around the sensing device 606, the size of which is based on the propagation characteristics of the RF sensing signals. For example, higher powered, lower frequency RF sensing signals may have a greater propagation than lower powered, higher frequency RF sensing signals, and therefore, the "environment" of the sensing device 606 may be larger in the former case than in the latter.

If received, the sensing device 606 can also measure properties (e.g., ToA, RSRP, AoA) of the one or more RF sensing signals from the transmitter device 602 to detect the presence of the device-equipped target object 604. For example, as described herein, the sensing device 606 can compare properties of the RF sensing response signal(s) received from the device-equipped target object 604 to properties of the RF sensing signal(s) received from the transmitter device 602 to detect the device-equipped target object 604, and optionally the distance and direction to the device-equipped target object 604..

Note that although the foregoing has described the sensing device 606 as performing the sensing, the sensing device 606 could report its measurements of the RF signals to another entity (e.g., a sensing server, serving base station, third-party application, etc.), and the other entity may perform the sensing.

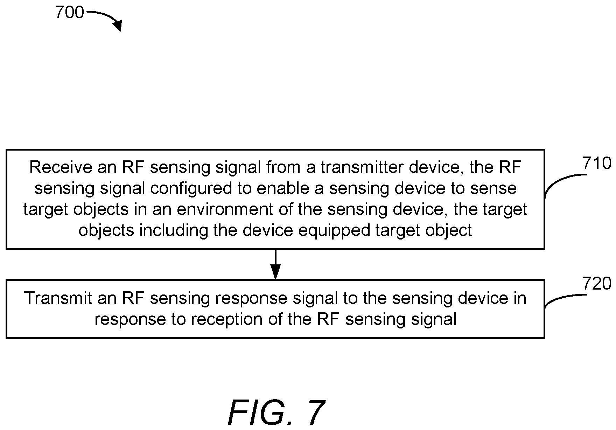

FIG. 7 illustrates an example method 700 of wireless environment sensing, according to aspects of the disclosure. In an aspect, the method 700 may be performed by a device-equipped target object (e.g., any of the base stations or UEs described herein). As a specific example, the method 700 may be performed by a device-equipped target object 604 in FIG. 6.

At 710, the device-equipped target object receives an RF sensing signal (e.g., RF sensing signal 434) from a transmitter device (e.g., transmitter device 602), as at 620 of FIG. 6. In an aspect, the RF sensing signal may be configured to enable a sensing device (e.g., sensing device 606) to sense target objects, including the device-equipped target object, in an environment of the sensing device. In an aspect, where the device-equipped target object is a UE, operation 710 may be performed by the one or more WWAN transceivers 310, the one or more processors 332, memory 340, and/or sensing component 342, any or all of which may be considered means for performing this operation. In an aspect, where the device-equipped target object is a base station, operation 710 may be performed by the one or more WWAN transceivers 350, the one or more processors 384, memory 386, and/or sensing component 388, any or all of which may be considered means for performing this operation.

At 720, the device-equipped target object transmits an RF sensing response signal to the sensing device in response to reception of the RF sensing signal, as at 630 of FIG. 6. In an aspect, where the device-equipped target object is a UE, operation 720 may be performed by the one or more WWAN transceivers 310, the one or more processors 332, memory 340, and/or sensing component 342, any or all of which may be considered means for performing this operation. In an aspect, where the device-equipped target object is a base station, operation 720 may be performed by the one or more WWAN transceivers 350, the one or more processors 384, memory 386, and/or sensing component 388, any or all of which may be considered means for performing this operation.

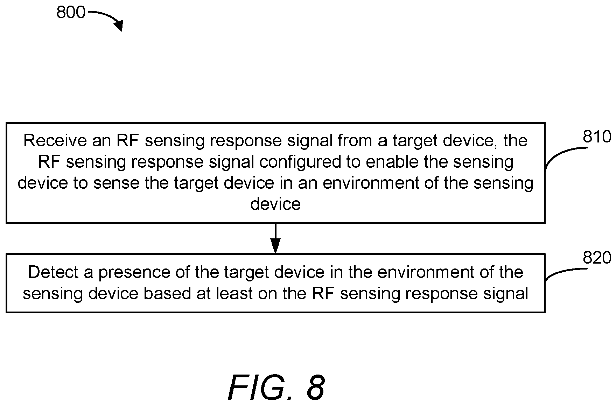

**FIG. 8** illustrates an example method 800 of wireless environment sensing, according to aspects of the disclosure. In an aspect, the method 800 may be performed by a sensing device (e.g., any of the base stations or UEs described herein). As a specific example, the method 800 may be performed by the sensing device 606 in FIG. 6.

At 810, the sensing device receives an RF sensing response signal from a device-equipped target object (e.g., a device-equipped target object 604 in FIG. 6), as at 650 of FIG. 6. In an aspect, the RF sensing response signal may be configured to enable the sensing device to sense the device-equipped target object in an environment of the sensing device. In an aspect, where the device-equipped target object is a UE, operation 810 may be performed by the one or more WWAN transceivers 310, the one or more processors 332, memory 340, and/or sensing component 342, any or all of which may be considered means for performing this operation. In an aspect, where the device-equipped target object is a base station, operation 810 may be performed by the one or more WWAN transceivers 350, the one or more processors 384, memory 386, and/or sensing component 388, any or all of which may be considered means for performing this operation.

At 820, the sensing device detects a presence of the device-equipped target object in the environment of the sensing device based at least on the RF sensing response signal, as at 660 of FIG. 6. In an aspect, where the device-equipped target object is a UE, operation 820 may be performed by the one or more WWAN transceivers 310, the one or more processors 332, memory 340, and/or sensing component 342, any or all of which may be considered means for performing this operation. In an aspect, where the device-equipped target object is a base station, operation 820 may be performed by the one or more WWAN transceivers 350, the one or more processors 384, memory 386, and/or sensing component 388, any or all of which may be considered means for performing this operation.

As will be appreciated, a technical advantage of the methods 700 and 800 is reduced power consumption and reduced interference. More specifically, compared to device-free target objects, where the sensing relies only on passive reflections, the sensing range and accuracy can be improved with the same transmit power of the RF sensing signal. In other words, to achieve the same sensing range and accuracy, the transmitter device can use less power for the RF sensing signal, which is beneficial for power saving and reduces interference emission.

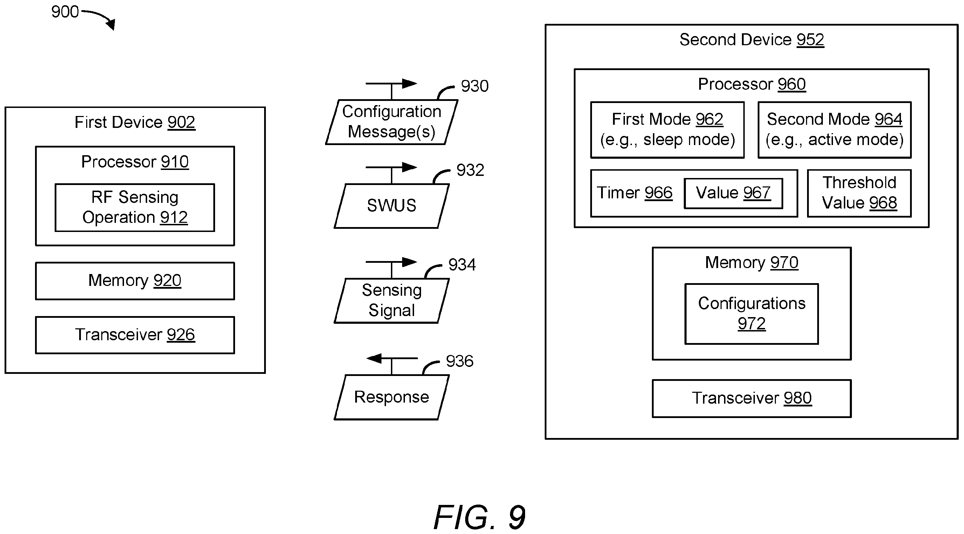

**FIG. 9** illustrates an example of a wireless communication system 900 according to aspects of the disclosure. The wireless communication system 900 may include a first device 902 and a second device 952. The devices 902, 952 may each be configured to wirelessly communicate with one another, with one or more other devices, or a combination thereof. To illustrate, in one example, the first device 902 corresponds to a base station (such as the base station 102), and the second device 952 corresponds to a UE (such as the UE 104). In another example, the first device 902 corresponds to a UE (such as the UE 104), and the second device 952 corresponds to a base station (such as the base station 102). In an additional example, one or both of the devices 902, 952 may correspond to another device, such as a wireless relay device.

The first device 902 may include one or more processors, such as a processor 910, a memory 920, and a transceiver 926. In some examples, one or more of the processor 910, the memory 920, or the transceiver 926 include or correspond to one or more features of FIGS. 3A and 3B. To illustrate, the processor 910 may correspond to the one or more processors 332 or the one or more processors 384, and the memory 920 may correspond to the memory 340 or the memory 386. In some examples, the transceiver 926 may correspond to the one or more WWAN transceivers 310 or the one or more WWAN transceivers 350.

The second device 952 may include one or more processors, such as a processor 960, a memory 970, and a transceiver 980. In some examples, one or more of the processor 960, the memory 970, or the transceiver 980 include or correspond to one or more features of FIGS. 3A and 3B. To illustrate, the processor 960 may correspond to the one or more processors 332 or the one or more processors 384, and the memory 970 may correspond to the memory 340 or the memory 386. In some examples, the transceiver 980 may correspond to the one or more WWAN transceivers 310 or the one or more WWAN transceivers 350.

During operation, the first device 902 may initiate a radio frequency (RF) sensing operation 912. The RF sensing operation 912 may include transmitting (e.g., via the transceiver 926) one or more sensing signals, such as a sensing signal 934, and receiving (e.g., via the transceiver 926) information associated with the one or more sensing signals, such as one or more reflections of the sensing signal 934 that are reflected from a target object. In some examples, the RF sensing operation 912 includes a monostatic radar operation, a bi-static radar operation, or both. The first device 902 may perform the RF sensing operation 912 determine (or estimate) distance of the target object from the first device 902, a speed (or velocity) of the target object, a size of the target object, or a position (e.g., an angle of arrival (AoA)) of the target object, one or more other characteristics of the target object, or a combination thereof. In some examples, the second device 952 corresponds to the target device of the RF sensing operation 912. In some other examples, the second device 952 is distinct from the target device.

In some aspects of the disclosure, the second device 952 assists in the RF sensing operation 912. For example, the second device 952 may provide information related to the sensing signal 934 (as detected by the second device 952) to the first device 902, such as by transmitting a version of the sensing signal 934 as received by the second device 952. The information related to the sensing signal 934 may enable the first device 902 to increase accuracy of the RF sensing operation 912, such as by enabling the first device 902 to estimate effects of noise or interference on the RF sensing operation 912, as an illustrative example.

In some circumstances, the second device 952 may operate based on first mode 962 (e.g., a sleep mode) during transmission of the sensing signal 934 by the first device 902. For example, during operation based on the first mode 962, the second device 952 may operate the transceiver 980 based on a low-power or inactive mode of operation. In this case, the second device 952 may be unable to detect the sensing signal 934, to transmit a response to the sensing signal 934, or both.

In some aspects of the disclosure, the first device 902 transmits a sensing wakeup signal (SWUS) 932 indicating (or requesting) that the second device 952 remain in a second mode 964 (e.g., an active mode) to receive the sensing signal 934. In some examples, the first mode 962 corresponds to radio resource control (RRC) idle mode or an RRC inactive mode, and the second mode corresponds to an RRC connected mode. Alternatively or in addition, the first mode 962 may be associated with a first power consumption by the second device 952, and the second mode 964 may be associated with a second power consumption by the second device 952, where the second power consumption greater than the first power consumption.

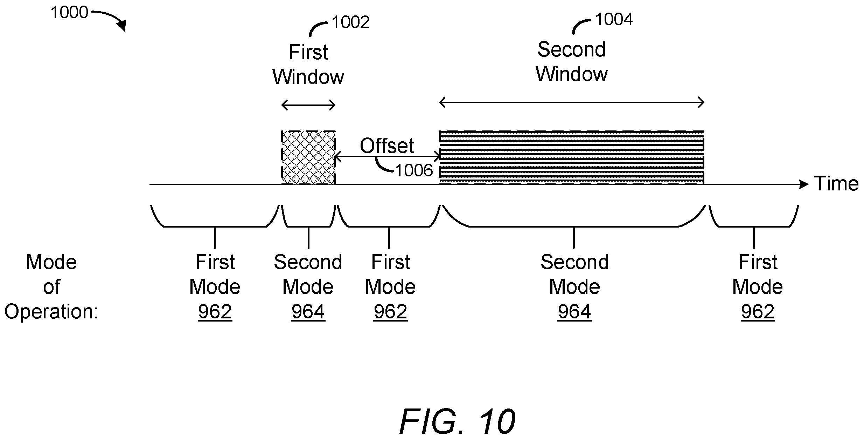

To further illustrate, **FIG. 10** is a timing diagram 1000 in accordance with aspects of the disclosure. FIG. 10 illustrates a first window 1002, a second window 1004, and an offset time interval 1006 between the first window 1002 and the second window 1004. FIG. 10 depicts that the second device 952 may operate according to the second mode 964 during the first window 1002 and during the second window 1004. For example, the second device 952 may transition from the first mode 962 to the second mode 964 to receive the SWUS 932 during the first window 1002.

In response to detecting the SWUS 932, the second device 952 may optionally transition from the second mode 964 to the first mode 962 and may operate based on the first mode 962 for the offset time interval 1006 (or at least a portion of the offset time interval 1006). After the offset time interval 1006, the second device 952 may transition from the first mode 962 to the second mode 964 to receive the sensing signal 934 during the second window 1004. In some other examples, if the second device 952 fails to detect the SWUS 932 during the first window 1002, the second device 952 may perform one or more other operations, such as by operating according to the first mode 962 during the second window 1004.

Although the example of FIG. 10 illustrates that the second device 952 may operate according to the first mode 962 prior to the first window 1002, during the offset time interval 1006, and after the second window 1004, other examples are also within the scope of the disclosure. To illustrate, in some other examples, the second device 952 may operate according to second mode 964 prior to the first window 1002, during the offset time interval 1006, after the second window 1004, or a combination thereof.

Further, although two modes 962, 964 are described for illustration, in some other examples, the second device 952 may operate based on a different number of modes. For example, the second device 952 may operate based on the second mode 964 during the first window 1002 and may operate based on a third mode during the second window 1004. In some examples, the third mode may be associated with a third power consumption that is greater than the second power consumption associated with the second mode 964. In this case, the second mode 964 may correspond to a "medium power" mode of operation used to monitor for the SWUS 932, and the third mode may correspond to a "high power" mode of operation used to monitor for the sensing signal 934.

Referring again to FIG. 9, in some examples, the second device 952 receives one or more configuration messages 930 prior to the first window 1002. For example, the first device 902 (or another device) may transmit the one or more configuration messages 930 to the second device 952. The one or more configuration messages 930 may be associated with the SWUS 932, the sensing signal 934, or both. To illustrate, in some examples, the one or more configuration messages 930 indicate one or more of a duration of the first window 1002, a detection threshold associated with the SWUS 932, a duration of the SWUS 932, a periodicity of the first window, or semi-persistent scheduling (SPS) of the SWUS 932, as illustrative examples. Alternatively or in addition, the one or more configuration messages 930 may indicate one or more of a duration of the second window 1004, a detection threshold associated with the sensing signal 934, a duration of the sensing signal 934, a periodicity of the second window 1004, or SPS of the sensing signal 934, as illustrative examples. In some implementations, the one or more configuration messages 930 include radio resource control (RRC) configuration messages, medium access control (MAC) control element (MAC-CE) messages, downlink control information (DCI) messages, system information messages (e.g., a system information block (SIB) or a positioning SIB (posSIB)), or a combination thereof.

Although the example of FIG. 9 illustrates one second device 952 for illustration, one or more aspects described herein may be performed on a group basis. For example, a plurality of devices (including the second device 952) may assist in the RF sensing operation 912, and the one or more configuration messages 930 may be transmitted to the plurality of devices.

In some examples, the one or more configuration messages 930 explicitly identify one or more parameters associated with the SWUS 932, the sensing signal 934, or both. To illustrate, a configuration message 930 may include a plurality of fields each associated with a respective value or indicator. As an example, a configuration message 930 may include a field indicating one or more resources (e.g., time slots, frequencies, or both) to be used to transmit the SWUS 932, the sensing signal 934, or both. In this case, the one or more configuration messages 930 may enable the second device 952 to receive the SWUS 932, the sensing signal 934, or both, such as by tuning the transceiver 980 based on one or more resources indicated by the one or more configuration messages 930.

To further illustrate, in some examples, the one or more configuration messages 930 indicate a duration of the offset time interval 1006 between the first window 1002 and the second window 1004. In some implementations, the first device 902 selects the duration of the offset time interval 1006 based on a duration of the SWUS 932. To illustrate, upon receiving (or beginning to receive) the SWUS 932, the second device 952 may use at least a threshold number of cycles to process the SWUS 932 (e.g., to demodulate the SWUS 932, to decode the SWUS 932, and to detect one or more values or indicators included in the SWUS 932). In this case, the duration of the offset time interval 1006 may correspond to the threshold number of cycles to enable the second device 952 to receive and process the SWUS 932 prior to the second window 1004.

Alternatively or in addition to the one or more configuration messages 930, in some examples, the second device 952 uses an implicit technique to determine one or more parameters associated with the SWUS 932, the sensing signal 934, or both. To illustrate, the second device 952 may determine the one or more parameters based on a first identifier (ID) of the first device 902 (such as an International Mobile Subscriber Identity (IMSI), a media access control (MAC) address, or an Internet Protocol (IP) address of the first device 902), a second ID of the second device 952 (such as an IMSI, MAC address, or IP address of the second device 952), or a time value indicated by a clock accessible to the second device. Depending on the example, the clock may correspond to a device clock of the second device 952, a global network clock that is accessible to the second device 952, or another clock. In some examples, the first device 902 and the second device 952 operate based on a wireless communication protocol that specifies one or more operations for determining the one or more parameters, such as by hashing one or more of the first ID, the second ID, or the time value to determine the one or more parameters. As a non-limiting example, the wireless communication protocol may specify a hash function having inputs of the first ID, the second ID, and the time value and having an output that specifies one or more resources for receiving the SWUS 932 or the sensing signal 934.

In some examples, the first window 1002 is selected based on one or more communication intervals associated with communication by one or both of the first device 902 or the second device 952. For example, the first window 1002 the one or more communication intervals include one or more of a synchronization signal block (SSB), a paging occasion (PO), or a discontinuous reception (DRX) cycle. In this example, the first window 1002 may be aligned with the SSB, the PO, or the DRX cycle. To further illustrate, a periodicity of the first window 1002 may be selected based on an integer multiple of a periodicity of a particular interval of the one or more communication intervals. As a particular non-limiting example, the periodicity of the first window 1002 may be twice the periodicity of an SSB (so that the first window 1002 occurs twice for each occurrence of the SSB). Other examples are also within the scope of the disclosure.

In an illustrative implementation, the second device 952 stores multiple configurations 972 for the SWUS 932 corresponding to multiple modes of operation of the second device 952. The multiple modes of operation may include an RRC connected mode, an RRC inactive mode, and an RRC idle mode. To illustrate, the multiple configurations 972 may include a first periodicity of the SWUS 932 for the RRC connected mode, a second periodicity of the SWUS 932 for the RRC inactive mode, and a third periodicity of the SWUS 932 for the RRC idle mode. In this example, the second device 952 may expect to receive (or potentially receive) the SWUS 932 based on the first periodicity, the second periodicity, or the third periodicity if the second device 952 is operating according to the RRC connected mode, the RRC inactive mode, or the RRC idle mode, respectively. In some examples, the first periodicity is greater than the second periodicity (where the SWUS 932 is expected to be transmitted more frequently during the RRC connected mode as compared to the RRC inactive mode), and the second periodicity is greater than the third periodicity (where the SWUS 932 is expected to be transmitted more frequently during the RRC inactive mode as compared to the RRC idle mode). In some examples, the third periodicity corresponds to a null value (e.g., where the SWUS 932 is not expected to be transmitted during operation according to the RRC idle mode).

The SWUS 932 may have a particular signal format or configuration based on the particular implementation. In some examples, one or both of the first device 902 or the second device 952 operate based on a wireless communication protocol, and the SWUS 932 corresponds to a physical layer (PHY) signal having a level one (L1) signal format associated with a protocol stack specified by the wireless communication protocol. In another example, the SWUS 932 has a layer two (L2) signal format associated with a protocol stack specified by the wireless communication protocol. In some examples, the SWUS 932 has a DCI signal format.

In some examples, the SWUS 932 and the sensing signal 934 have a common signal format (e.g., a common frequency, a common amplitude, a common phase, a common signaling pattern, a common bit pattern, another common parameter, or a combination thereof). In some examples, the SWUS 932 corresponds to a repetition of the sensing signal 934 having a particular duration and a particular pattern. As a non-limiting example, the sensing signal 934 may include multiple repetitions of a bit pattern (e.g., "0," "1", "0," "1," etc.), and the SWUS 932 may correspond to one repetition of the bit pattern (e.g., "0," "1").

In one example, the repetition enables the second device 952 to perform a receiver beam refinement operation in connection with reception of the sensing signal 934. For example, due to the common signal format of the SWUS 932 and the sensing signal 934, the second device 952 may determine (or predict) a directionality of the sensing signal 934 based on directionality of the SWUS 932. In this case, the second device 952 may steer one or RF components (such as the transceiver 980 or an antenna array coupled to or included in the transceiver 980) during the second window 1004 based on the directionality of the SWUS 932.

In some implementations, the second device 952 initiates operation of a timer 966 in response to detecting the SWUS 932 and monitors for the sensing signal 934 during operation of the timer 966 and until expiration of the timer 966. To illustrate, initiating operation of the timer 966 may include resetting a value 967 of the timer 966 and initiating counting by beginning to adjust (e.g., increment or decrement) the value 967 of the timer 966. The second device 952 may monitor for the sensing signal 934 until the value 967 satisfies (e.g., is greater than, or is greater than or equal to) a threshold value 968. In response to detecting that the value 967 of the timer 966 satisfies the threshold value 968, the second device 952 may detect expiration of the timer 966 and may terminate monitoring for the sensing signal 934 (at least until another instance of the SWUS 932 is received).

In some implementations, one or both of the SWUS 932 or the sensing signal 934 correspond to millimeter wave (mmWave) signals associated with a 5G NR wireless communication protocol. In this case, the mmWave signals may be "reused" for the RF sensing operation 912.

The second device 952 may transmit, to the first device 902, a response 936 to the sensing signal 934. To illustrate, in some examples, the response 936 indicates one or more received parameters associated with the sensing signal 934 (as received by the second device 952). For example, the response 936 may indicate an amplitude of the sensing signal 934 as received by the second device 952 or a phase of the sensing signal 934 as received by the second device 952, as illustrative examples. In some implementations, the response 936 includes a version of the sensing signal 934 as received by the second device 952, such as an amplified received version of the sensing signal 934.

The first device 902 may use information indicated by the response 936 in connection with the RF sensing operation 912. To illustrate, the information indicated by the response 936 may enable the first device 902 to increase accuracy of the RF sensing operation 912, such as by enabling the first device 902 to estimate effects of noise or interference on the RF sensing operation 912, as an illustrative example.

Although certain aspects of FIGS. 9 and 10 have been described separately for illustration, aspects may be combined without departing from the scope of the disclosure. For example, in some implementations, the first device 902 may also perform operations described with reference to the second device 952, such as by functioning as a target device for the second device 952 (or another device) during another RF sensing operation. As another example, the second device 952 may also perform operations described with reference to the first device 902, such as by transmitting an SWUS and a sensing signal to the first device 902 (or another device) during another RF sensing operation.

One or more aspects of FIGS. 9 and 10 may improve accuracy or quality of an RF sensing operation 912. For example, by transmitting the SWUS 932, the second device 952 may transition to (or remain in) the second mode 964, which may enable the second device 952 to receive the sensing signal 934 during the second window 1004. By operating according to the second mode 964 during the second window 1004, the second device 952 may detect one or more received characteristics of the sensing signal 934 and may report the one or more received characteristics via the response 936. As a result, accuracy or quality of the RF sensing operation 912 may be improved as compared to some other systems that permit a device to "sleep through" transmission of a sensing signal.

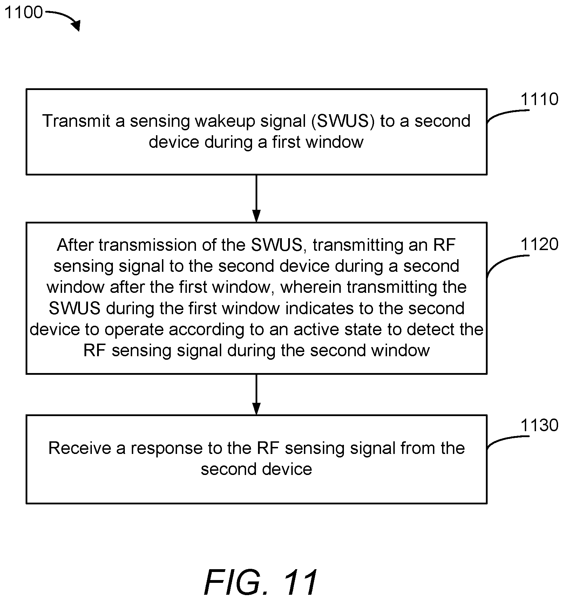

**FIG. 11** is a flow chart of a method 1100 of wireless communication according to aspects of the disclosure. In some examples, the method 1100 is performed by the first device 902.

The method 1100 includes transmitting, by the first device 902, a sensing wakeup signal SWUS to a second device during a first window, at 1110. For example, the first device 902 may transmit the SWUS 932 to the second device 952 during the first window 1002. In an aspect, where the first device 902 is a UE, operation 1110 may be performed by the one or more WWAN transceivers 310, the one or more processors 332, memory 340, and/or sensing component 342, any or all of which may be considered means for performing this operation. In an aspect, where the first device 902 is a base station, operation 1110 may be performed by the one or more WWAN transceivers 350, the one or more processors 384, memory 386, and/or sensing component 388, any or all of which may be considered means for performing this operation.

The method 1100 further includes, after transmitting the SWUS, transmitting, by the first device 902, an RF sensing signal to the second device during a second window after the first window, at 1120. Transmitting the SWUS during the first window indicates to the second device to operate according to an active state to detect the RF sensing signal during the second window. For example, the first device 902 may transmit the RF sensing signal 934 to the second device 952 during the second window 1004 after the first window 1002, and transmitting the SWUS 932 during the first window 1002 may indicate to the second device 952 to operate according to the second mode 964 (e.g., an active mode) to detect the RF sensing signal 934 during the second window 1004. In an aspect, where the first device 902 is a UE, operation 1120 may be performed by the one or more WWAN transceivers 310, the one or more processors 332, memory 340, and/or sensing component 342, any or all of which may be considered means for performing this operation. In an aspect, where the first device 902 is a base station, operation 1120 may be performed by the one or more WWAN transceivers 350, the one or more processors 384, memory 386, and/or sensing component 388, any or all of which may be considered means for performing this operation.

The method 1100 further includes receiving, by the first device 902, a response to the RF sensing signal from the second device, at 1130. For example, the first device 902 may receive the response 936 from the second device 952. In an aspect, where the first device 902 is a UE, operation 1130 may be performed by the one or more WWAN transceivers 310, the one or more processors 332, memory 340, and/or sensing component 342, any or all of which may be considered means for performing this operation. In an aspect, where the first device 902 is a base station, operation 1130 may be performed by the one or more WWAN transceivers 350, the one or more processors 384, memory 386, and/or sensing component 388, any or all of which may be considered means for performing this operation.

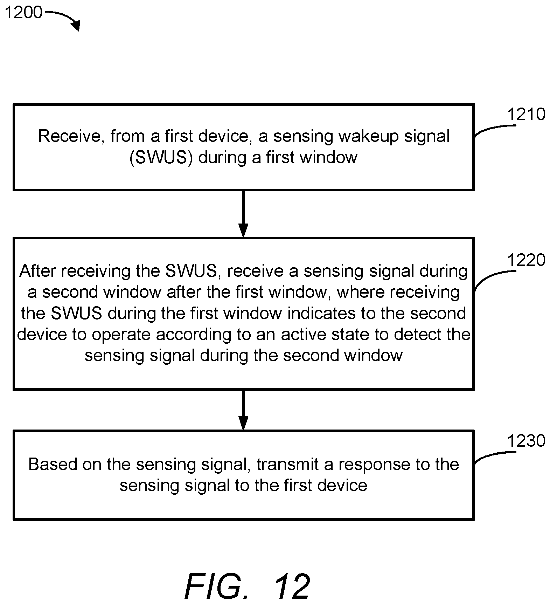

**FIG. 12** is a flow chart of a method 1200 of wireless communication according to aspects of the disclosure. In some examples, the method 1200 is performed by the second device 952.

The method 1200 includes receiving, from a first device (e.g., first device 902) by the second device 952, an SWUS during a first window, at 1210. For example, second device 952 may receive the SWUS 932 from the first device 902 during the first window 1002. In an aspect, where the second device 952 is a UE, operation 1210 may be performed by the one or more WWAN transceivers 310, the one or more processors 332, memory 340, and/or sensing component 342, any or all of which may be considered means for performing this operation. In an aspect, where the second device 952 is a base station, operation 1210 may be performed by the one or more WWAN transceivers 350, the one or more processors 384, memory 386, and/or sensing component 388, any or all of which may be considered means for performing this operation.

The method 1200 further includes, after receiving the SWUS, receiving, by the second device952, a sensing signal during a second window after the first window, at 1220. Receiving the SWUS during the first window indicates to the second device 952 to operate according to an active state to detect the sensing signal during the second window. For example, the second device 952 may receive the sensing signal 934 from the first device 902 during the second window 1004 after the first window 1002, and receiving the SWUS 932 during the first window 1002 may indicate to the second device 952 to operate according to the second mode 964 (e.g., an active mode) to detect the sensing signal 934 during the second window 1004. In an aspect, where the second device 952 is a UE, operation 1220 may be performed by the one or more WWAN transceivers 310, the one or more processors 332, memory 340, and/or sensing component 342, any or all of which may be considered means for performing this operation. In an aspect, where the second device 952 is a base station, operation 1220 may be performed by the one or more WWAN transceivers 350, the one or more processors 384, memory 386, and/or sensing component 388, any or all of which may be considered means for performing this operation.

The method 1200 further includes, based on the sensing signal, transmitting, by the second device 952, a response to the sensing signal to the first device, at 1230. For example, the second device 952 may transmit the response 936 to the first device 902. In an aspect, where the second device 952 is a UE, operation 1230 may be performed by the one or more WWAN transceivers 310, the one or more processors 332, memory 340, and/or sensing component 342, any or all of which may be considered means for performing this operation. In an aspect, where the second device 952 is a base station, operation 1230 may be performed by the one or more WWAN transceivers 350, the one or more processors 384, memory 386, and/or sensing component 388, any or all of which may be considered means for performing this operation.

As will be appreciated, a technical advantage of the methods 1100 and 1200 is reduced power consumption.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

Implementation examples are described in the following numbered clauses:
Clause 1. A method of wireless environment sensing performed by a device-equipped target object, comprising: receiving a radio frequency (RF) sensing signal from a transmitter device, the RF sensing signal transmitted by the transmitter device to enable a sensing device to sense target objects, including the device-equipped target object, in an environment of the sensing device; and transmitting an RF sensing response signal to the sensing device in response to reception of the RF sensing signal.
Clause 2. The method of clause 1, wherein the RF sensing response signal is a device-specific RF sensing signal.
Clause 3. The method of clause 2, wherein: an identifier of the device-equipped target object is included in the device-specific RF sensing signal, an identifier of the sensing device is included in the device-specific RF sensing signal, or an identifier of the transmitter device is included in the device-specific RF sensing signal.
Clause 4. The method of any of clauses 1 to 3, wherein the RF sensing response signal is configured to mimic a reflection of the RF sensing signal.
Clause 5. The method of clause 4, wherein the device-equipped target object records the RF sensing signal and retransmits the recorded RF sensing signal as the RF sensing response signal after a delay, the delay indicating that the RF sensing response signal is a reflected signal.
Clause 6. The method of any of clauses 1 to 5, wherein the device-equipped target object transmits the RF sensing response signal a threshold period of time after reception of the RF sensing signal.
Clause 7. The method of clause 6, wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, or any combination thereof.
Clause 8. The method of any of clauses 6 to 7, wherein the threshold period of time varies over time as a function of an identifier of the device-equipped target object or an identifier of the sensing device.
Clause 9. The method of any of clauses 1 to 8, further comprising: determining a signal strength measurement of the RF sensing signal.
Clause 10. The method of clause 9, wherein the device-equipped target object transmits the RF sensing response signal based on the signal strength measurement being below a threshold.
Clause 11. The method of any of clauses 9 to 10, further comprising: setting a transmit power for the RF sensing response signal based on the signal strength measurement.
Clause 12. The method of any of clauses 9 to 11, further comprising: determining a transmit beam for the RF sensing response signal based on the signal strength measurement.
Clause 13. The method of any of clauses 9 to 12, wherein the signal strength measurement comprises a reference signal received power (RSRP) measurement.
Clause 14. The method of any of clauses 1 to 13, further comprising: receiving one or more configuration parameters for the RF sensing response signal.
Clause 15. The method of clause 14, wherein the one or more configuration parameters comprise: a transmit power control parameter, a signal strength threshold for the RF sensing signal, a delay threshold, one or more occasions during which RF sensing signals are expected to be received, or any combination thereof.
Clause 16. The method of any of clauses 14 to 15, wherein the one or more configuration parameters are received in: radio resource control (RRC) signaling, one or more medium access control control elements (MAC-CEs), downlink control information (DCI), one or more system information blocks (SIBs), or any combination thereof.
Clause 17. The method of any of clauses 14 to 16, wherein the one or more configuration parameters are received from: the transmitter device, or a serving base station of the device-equipped target object.
Clause 18. The method of any of clauses 1 to 17, further comprising: transmitting one or more configuration parameters for the RF sensing response signal.
Clause 19. The method of clause 18, wherein the device-equipped target object transmits the one or more configuration parameters to a serving base station of the device-equipped target object.
Clause 20. The method of any of clauses 18 to 19, wherein the device-equipped target object transmits the one or more configuration parameters to the sensing device.
Clause 21. The method of any of clauses 18 to 20, wherein the device-equipped target object transmits the one or more configuration parameters in one or more capability messages or one or more assistance information messages.
Clause 22. A method of wireless environment sensing performed by a sensing device, comprising: receiving a radio frequency (RF) sensing response signal from a device-equipped target object, the RF sensing response signal transmitted by the device-equipped target object to enable the sensing device to sense the device-equipped target object in an environment of the sensing device; and detecting a presence of the device-equipped target object in the environment of the sensing device based at least on the RF sensing response signal.
Clause 23. The method of clause 22, further comprising: receiving an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 24. The method of clause 23, wherein the sensing device receives the RF sensing response signal at least a threshold period of time after reception of the RF sensing signal.
Clause 25. The method of clause 24, wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, including the RF sensing signal, or any combination thereof.
Clause 26. The method of any of clauses 24 to 25, wherein the threshold period of time varies over time as a function of an identifier of the device-equipped target object or an identifier of the sensing device.
Clause 27. The method of clause 23, wherein the RF sensing response signal is configured to mimic the RF sensing signal.
Clause 28. The method of any of clauses 22 to 27, wherein the RF sensing response signal is a device-specific RF sensing signal.
Clause 29. The method of clause 28, wherein: an identifier of the device-equipped target object is included in the device-specific RF sensing signal, an identifier of the sensing device is included in the device-specific RF sensing signal, or an identifier of a transmitter device is included in the device-specific RF sensing signal.
Clause 30. The method of any of clauses 22 to 29, further comprising: receiving one or more configuration parameters for the RF sensing response signal.
Clause 31. The method of clause 30, wherein the one or more configuration parameters comprise: a transmit power control parameter, a signal strength threshold for the RF sensing response signal, a delay threshold, one or more occasions during which the RF sensing response signal is to be transmitted, or any combination thereof.
Clause 32. The method of any of clauses 30 to 31, wherein the one or more configuration parameters are received in: radio resource control (RRC) signaling, one or more medium access control control elements (MAC-CEs), downlink control information (DCI), one or more system information blocks (SIBs), or any combination thereof.
Clause 33. The method of clause 32, wherein the one or more configuration parameters are received from a serving base station of the sensing device.
Clause 34. The method of any of clauses 30 to 33, wherein the sensing device receives the one or more configuration parameters in one or more capability messages or one or more assistance information messages.
Clause 35. The method of clause 34, wherein the one or more configuration parameters are received from the device-equipped target object.
Clause 36. A device-equipped target object, comprising: at least one transceiver; and at least one processor communicatively coupled to the at least one transceiver, the at least one processor configured to: receive, via the at least one transceiver, a radio frequency (RF) sensing signal from a transmitter device, the RF sensing signal transmitted by the transmitter device to enable a sensing device to sense target objects, including the device-equipped target object, in an environment of the sensing device; and cause the at least one transceiver to transmit an RF sensing response signal to the sensing device in response to reception of the RF sensing signal.
Clause 37. The device-equipped target object of clause 36, wherein the RF sensing response signal is a device-specific RF sensing signal.
Clause 38. The device-equipped target object of clause 37, wherein: an identifier of the device-equipped target object is included in the device-specific RF sensing signal, an identifier of the sensing device is included in the device-specific RF sensing signal, or an identifier of the transmitter device is included in the device-specific RF sensing signal.
Clause 39. The device-equipped target object of any of clauses 36 to 38, wherein the RF sensing response signal is configured to mimic a reflection of the RF sensing signal.
Clause 40. The device-equipped target object of clause 39, wherein the device-equipped target object records the RF sensing signal and retransmits the recorded RF sensing signal as the RF sensing response signal after a delay, the delay indicating that the RF sensing response signal is a reflected signal.
Clause 41. The device-equipped target object of any of clauses 36 to 40, wherein the at least one processor causes the at least one transceiver to transmit the RF sensing response signal a threshold period of time after reception of the RF sensing signal.
Clause 42. The device-equipped target object of clause 41, wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, or any combination thereof.
Clause 43. The device-equipped target object of any of clauses 41 to 42, wherein the threshold period of time varies over time as a function of an identifier of the device-equipped target object or an identifier of the sensing device.
Clause 44. The device-equipped target object of any of clauses 36 to 43, wherein the at least one processor is further configured to: determine a signal strength measurement of the RF sensing signal.
Clause 45. The device-equipped target object of clause 44, wherein the at least one processor causes the at least one transceiver to transmit the RF sensing response signal based on the signal strength measurement being below a threshold.
Clause 46. The device-equipped target object of any of clauses 44 to 45, wherein the at least one processor is further configured to: set a transmit power for the RF sensing response signal based on the signal strength measurement.
Clause 47. The device-equipped target object of any of clauses 44 to 46, wherein the at least one processor is further configured to: determine a transmit beam for the RF sensing response signal based on the signal strength measurement.
Clause 48. The device-equipped target object of any of clauses 44 to 47, wherein the signal strength measurement comprises a reference signal received power (RSRP) measurement.
Clause 49. The device-equipped target object of any of clauses 36 to 48, wherein the at least one processor is further configured to: receive, via the at least one transceiver, one or more configuration parameters for the RF sensing response signal.
Clause 50. The device-equipped target object of clause 49, wherein the one or more configuration parameters comprise: a transmit power control parameter, a signal strength threshold for the RF sensing signal, a delay threshold, one or more occasions during which RF sensing signals are expected to be received, or any combination thereof.
Clause 51. The device-equipped target object of any of clauses 49 to 50, wherein the one or more configuration parameters are received in: radio resource control (RRC) signaling, one or more medium access control control elements (MAC-CEs), downlink control information (DCI), one or more system information blocks (SIBs), or any combination thereof.
Clause 52. The device-equipped target object of any of clauses 49 to 51, wherein the one or more configuration parameters are received from: the transmitter device, or a serving base station of the device-equipped target object.
Clause 53. The device-equipped target object of any of clauses 36 to 52, wherein the at least one processor is further configured to: cause the at least one transceiver to transmit one or more configuration parameters for the RF sensing response signal.
Clause 54. The device-equipped target object of clause 53, wherein the at least one processor causes the at least one transceiver to transmit the one or more configuration parameters to a serving base station of the device-equipped target object.
Clause 55. The device-equipped target object of any of clauses 53 to 54, wherein the at least one processor causes the at least one transceiver to transmit the one or more configuration parameters to the sensing device.
Clause 56. The device-equipped target object of any of clauses 53 to 55, wherein the at least one processor causes the at least one transceiver to transmit the one or more configuration parameters in one or more capability messages or one or more assistance information messages.
Clause 57. A sensing device, comprising: at least one transceiver; and at least one processor communicatively coupled to the at least one transceiver, the at least one processor configured to: receive, via the at least one transceiver, a radio frequency (RF) sensing response signal from a device-equipped target object, the RF sensing response signal transmitted by the device-equipped target object to enable the sensing device to sense the device-equipped target object in an environment of the sensing device; and detect a presence of the device-equipped target object in the environment of the sensing device based at least on the RF sensing response signal.
Clause 58. The sensing device of clause 57, wherein the at least one processor is further configured to: receive, via the at least one transceiver, an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 59. The sensing device of clause 58, wherein the sensing device receives the RF sensing response signal at least a threshold period of time after reception of the RF sensing signal.
Clause 60. The sensing device of clause 59, wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, including the RF sensing signal, or any combination thereof.
Clause 61. The sensing device of any of clauses 59 to 60, wherein the threshold period of time varies over time as a function of an identifier of the device-equipped target object or an identifier of the sensing device.
Clause 62. The sensing device of clause 58, wherein the RF sensing response signal is configured to mimic the RF sensing signal.
Clause 63. The sensing device of any of clauses 57 to 62, wherein the RF sensing response signal is a device-specific RF sensing signal.
Clause 64. The sensing device of clause 63, wherein: an identifier of the device-equipped target object is included in the device-specific RF sensing signal, an identifier of the sensing device is included in the device-specific RF sensing signal, or an identifier of a transmitter device is included in the device-specific RF sensing signal.
Clause 65. The sensing device of any of clauses 57 to 64, wherein the at least one processor is further configured to: receive, via the at least one transceiver, one or more configuration parameters for the RF sensing response signal.
Clause 66. The sensing device of clause 65, wherein the one or more configuration parameters comprise: a transmit power control parameter, a signal strength threshold for the RF sensing response signal, a delay threshold, one or more occasions during which the RF sensing response signal is to be transmitted, or any combination thereof.
Clause 67. The sensing device of any of clauses 65 to 66, wherein the one or more configuration parameters are received in: radio resource control (RRC) signaling, one or more medium access control control elements (MAC-CEs), downlink control information (DCI), one or more system information blocks (SIBs), or any combination thereof.
Clause 68. The sensing device of clause 67, wherein the one or more configuration parameters are received from a serving base station of the sensing device.
Clause 69. The sensing device of any of clauses 65 to 68, wherein the sensing device receives the one or more configuration parameters in one or more capability messages or one or more assistance information messages.
Clause 70. The sensing device of clause 69, wherein the one or more configuration parameters are received from the device-equipped target object.
Clause 71. An apparatus comprising means for performing a method according to any of clauses 1 to 70.
Clause 72. A non-transitory computer-readable medium storing computer-executable instructions, the computer-executable comprising at least one instruction for causing a computer or processor to perform a method according to any of clauses 1 to 70.

Additional implementation examples are described in the following numbered clauses:
Clause 1. A method of wireless communication, comprising: transmitting, by a first device, a sensing wakeup signal (SWUS) to a second device during a first window; after transmitting the SWUS, transmitting, by the first device, a sensing signal to the second device during a second window after the first window, wherein transmitting the SWUS during the first window indicates to the second device to operate according to an active state to detect the sensing signal during the second window; and based on the sensing signal, receiving, by the first device, a response to the sensing signal from the second device.
Clause 2. The method of clause 1, further comprising, prior to the first window, transmitting one or more configuration messages associated with the SWUS, the sensing signal, or both.
Clause 3. The method of clause 2, wherein the one or more configuration messages indicate one or more of a duration of the first window, a detection threshold associated with the SWUS, a duration of the SWUS, a periodicity of the first window, or semi-persistent scheduling (SPS) of the SWUS.
Clause 4. The method of any of clauses 2 to 3, wherein the one or more configuration messages indicate one or more of a duration of the second window, a detection threshold associated with the sensing signal, a duration of the sensing signal, a periodicity of the second window, or semi-persistent scheduling (SPS) of the sensing signal.
Clause 5. The method of any of clauses 2 to 4, wherein the one or more configuration messages are transmitted to a plurality of devices including the second device.
Clause 6. The method of any of clauses 2 to 5, wherein the one or more configuration messages explicitly identify one or more parameters associated with the SWUS, the sensing signal, or both.
Clause 7. The method of any of clauses 2 to 6, wherein the one or more configuration messages indicate a duration of an offset time interval between the first window and the second window.
Clause 8. The method of clause 7, wherein a duration of the offset time interval is selected based on a duration of the SWUS.
Clause 9. The method of any of clauses 1 to 8, wherein the second device uses an implicit technique to determine one or more parameters associated with the SWUS, the sensing signal, or both.
Clause 10. The method of clause 9, wherein the second device determines the one or more parameters based on a first identifier (ID) of the first device, a second ID of the second device, or a time value indicated by a clock accessible to the second device.
Clause 11. The method of any of clauses 1 to 10, further comprising selecting the first window based on one or more communication intervals associated with communication by one or both of the first device or the second device.
Clause 12. The method of clause 11, wherein the one or more communication intervals include one or more of a synchronization signal block (SSB), a paging occasion (PO), or a discontinuous reception (DRX) cycle.
Clause 13. The method of any of clauses 11 to 12, wherein a periodicity of the first window is selected based on an integer multiple of a periodicity of a particular interval of the one or more communication intervals.
Clause 14. The method of any of clauses 1 to 13, wherein the second device stores multiple configurations for the SWUS corresponding to multiple modes of operation of the second device.
Clause 15. The method of clause 14, wherein the multiple modes of operation include a radio resource control (RRC) connected mode, an RRC idle mode, and an RRC inactive mode.
Clause 16. The method of any of clauses 1 to 15, wherein one or both of the first device or the second device operate based on a wireless communication protocol, and wherein the SWUS corresponds to a physical layer (PHY) signal having a level one (L1) signal format associated with a protocol stack specified by the wireless communication protocol.
Clause 17. The method of any of clauses 1 to 15, wherein one or both of the first device or the second device operate based on a wireless communication protocol, and wherein the SWUS has a layer two (L2) signal format associated with a protocol stack specified by the wireless communication protocol.
Clause 18. The method of any of clauses 1 to 15, wherein the SWUS has a downlink control information (DCI) signal format.
Clause 19. The method of any of clauses 1 to 18, wherein the SWUS and the sensing signal have a common signal format.
Clause 20. The method of any of clauses 1 to 19, wherein the SWUS corresponds to a repetition of the sensing signal having a particular duration and a particular pattern.
Clause 21. The method of clause 20, wherein the repetition enables the second device to perform a receiver beam refinement operation in connection with reception of the sensing signal.
Clause 22. The method of any of clauses 1 to 21, wherein the second device transitions from a first mode of operation to a second mode of operation to receive the SWUS.
Clause 23. The method of clause 22, wherein the first mode corresponds to radio resource control (RRC) idle mode or an RRC inactive mode, and wherein the second mode corresponds to an RRC connected mode.
Clause 24. The method of any of clauses 22 to 23, wherein the first mode is associated with a first power consumption by the second device, and wherein the second mode is associated with a second power consumption by the second device, the second power consumption greater than the first power consumption.
Clause 25. The method of any of clauses 22 to 24, wherein, in response to detecting the SWUS, the second device transitions from the second mode to the first mode and operates based on the first mode for an offset time interval.
Clause 26. The method of clause 25, wherein, after the offset time interval, the second device transitions from the first mode to the second mode to receive the sensing signal.
Clause 27. The method of any of clauses 1 to 26, wherein the second device initiates operation of a timer in response to detecting the SWUS and monitors for the sensing signal during operation of the timer and until expiration of the timer.
Clause 28. The method of any of clauses 1 to 27, wherein the first device corresponds to one of a base station, a user equipment (UE), or a wireless relay.
Clause 29. The method of any of clauses 1 to 28, wherein the second device corresponds to one of a base station, a user equipment (UE), or a wireless relay.
Clause 30. The method of any of clauses 1 to 29, wherein one or both of the SWUS or the sensing signal correspond to millimeter wave (mmWave) signals associated with a fifth generation new radio (5GNR) wireless communication protocol.
Clause 31. A method of wireless communication, comprising: receiving, from a first device by a second device, a sensing wakeup signal (SWUS) during a first window; after receiving the SWUS, receiving, by the second device, a sensing signal during a second window after the first window, wherein receiving the SWUS during the first window indicates to the second device to operate according to an active state to detect the sensing signal during the second window; and based on the sensing signal, transmitting, by the second device, a response to the sensing signal to the first device.
Clause 32. The method of clause 31, further comprising, prior to the first window, receiving one or more configuration messages associated with the SWUS, the sensing signal, or both.
Clause 33. The method of clause 32, wherein the one or more configuration messages indicate one or more of a duration of the first window, a detection threshold associated with the SWUS, a duration of the SWUS, a periodicity of the first window, or semi-persistent scheduling (SPS) of the SWUS.
Clause 34. The method of any of clauses 32 to 33, wherein the one or more configuration messages indicate one or more of a duration of the second window, a detection threshold associated with the sensing signal, a duration of the sensing signal, a periodicity of the second window, or semi-persistent scheduling (SPS) of the sensing signal.
Clause 35. The method of any of clauses 32 to 34, wherein the one or more configuration messages are transmitted to a plurality of devices including the second device.
Clause 36. The method of any of clauses 32 to 35, wherein the one or more configuration messages explicitly identify one or more parameters associated with the SWUS, the sensing signal, or both.
Clause 37. The method of any of clauses 32 to 36, wherein the one or more configuration messages indicate a duration of an offset time interval between the first window and the second window.
Clause 38. The method of clause 37, wherein a duration of the offset time interval is selected based on a duration of the SWUS.
Clause 39. The method of any of clauses 31 to 38, wherein the second device uses an implicit technique to determine one or more parameters associated with the SWUS, the sensing signal, or both.
Clause 40. The method of clause 39, wherein the second device determines the one or more parameters based on a first identifier (ID) of the first device, a second ID of the second device, or a time value indicated by a clock accessible to the second device.
Clause 41. The method of any of clauses 31 to 40, wherein the first window is selected based on one or more communication intervals associated with communication by one or both of the first device or the second device.
Clause 42. The method of clause 41, wherein the one or more communication intervals include one or more of a synchronization signal block (SSB), a paging occasion (PO), or a discontinuous reception (DRX) cycle.
Clause 43. The method of any of clauses 41 to 42, wherein a periodicity of the first window is selected based on an integer multiple of a periodicity of a particular interval of the one or more communication intervals.
Clause 44. The method of any of clauses 31 to 43, wherein the second device stores multiple configurations for the SWUS corresponding to multiple modes of operation of the second device.
Clause 45. The method of clause 44, wherein the multiple modes of operation include a radio resource control (RRC) connected mode, an RRC idle mode, and an RRC inactive mode.
Clause 46. The method of any of clauses 31 to 45, wherein the second device communicates with the first device based on a wireless communication protocol, and wherein the SWUS corresponds to a physical layer (PHY) signal having a level one (L1) signal format associated with a protocol stack specified by the wireless communication protocol.
Clause 47. The method of any of clauses 31 to 45, wherein the second device communicates with the first device based on a wireless communication protocol, and wherein the SWUS has a layer two (L2) signal format associated with a protocol stack specified by the wireless communication protocol.
Clause 48. The method of any of clauses 31 to 45, wherein the SWUS has a downlink control information (DCI) signal format.
Clause 49. The method of any of clauses 31 to 48, wherein the SWUS and the sensing signal have a common signal format.
Clause 50. The method of any of clauses 31 to 49, wherein the SWUS corresponds to a repetition of the sensing signal having a particular duration and a particular pattern.
Clause 51. The method of clause 50, wherein the repetition enables the second device to perform a receiver beam refinement operation in connection with reception of the sensing signal.
Clause 52. The method of any of clauses 31 to 51, wherein the second device transitions from a first mode of operation to a second mode of operation to receive the SWUS.
Clause 53. The method of clause 52, wherein the first mode corresponds to radio resource control (RRC) idle mode or an RRC inactive mode, and wherein the second mode corresponds to an RRC connected mode.
Clause 54. The method of any of clauses 52 to 53, wherein the first mode is associated with a first power consumption by the second device, and wherein the second mode is associated with a second power consumption by the second device, the second power consumption greater than the first power consumption.
Clause 55. The method of any of clauses 52 to 54, wherein, in response to detecting the SWUS, the second device transitions from the second mode to the first mode and operates based on the first mode for an offset time interval.
Clause 56. The method of clause 55, wherein, after the offset time interval, the second device transitions from the first mode to the second mode to receive the sensing signal.
Clause 57. The method of any of clauses 31 to 56, wherein the second device initiates operation of a timer in response to detecting the SWUS and monitors for the sensing signal during operation of the timer and until expiration of the timer.
Clause 58. The method of any of clauses 31 to 57, wherein the first device corresponds to one of a base station, a user equipment (UE), or a wireless relay.
Clause 59. The method of any of clauses 31 to 58, wherein the second device corresponds to one of a base station, a user equipment (UE), or a wireless relay.
Clause 60. The method of any of clauses 31 to 59, wherein one or both of the SWUS or the sensing signal correspond to millimeter wave (mmWave) signals associated with a fifth generation new radio (5GNR) wireless communication protocol.
Clause 61. A first device, comprising: a memory; at least one transceiver; and at least one processor communicatively coupled to the memory and the at least one transceiver, the at least one processor configured to: transmit, via the at least one transceiver, a sensing wakeup signal (SWUS) to a second device during a first window; after transmitting the SWUS, transmitting, by the first device, a sensing signal to the second device during a second window after the first window, wherein transmitting the SWUS during the first window indicates to the second device to operate according to an active state to detect the sensing signal during the second window; and receive, via the at least one transceiver, based on the sensing signal, a response to the sensing signal from the second device.
Clause 62. The first device of clause 61, wherein the at least one processor is further configured to, prior to the first window, transmitting one or more configuration messages associated with the SWUS, the sensing signal, or both.
Clause 63. The first device of clause 62, wherein the one or more configuration messages indicate one or more of a duration of the first window, a detection threshold associated with the SWUS, a duration of the SWUS, a periodicity of the first window, or semi-persistent scheduling (SPS) of the SWUS.
Clause 64. The first device of any of clauses 62 to 63, wherein the one or more configuration messages indicate one or more of a duration of the second window, a detection threshold associated with the sensing signal, a duration of the sensing signal, a periodicity of the second window, or semi-persistent scheduling (SPS) of the sensing signal.
Clause 65. The first device of any of clauses 62 to 64, wherein the one or more configuration messages are transmitted to a plurality of devices including the second device.
Clause 66. The first device of any of clauses 62 to 65, wherein the one or more configuration messages explicitly identify one or more parameters associated with the SWUS, the sensing signal, or both.
Clause 67. The first device of any of clauses 62 to 66, wherein the one or more configuration messages indicate a duration of an offset time interval between the first window and the second window.
Clause 68. The first device of clause 67, wherein a duration of the offset time interval is selected based on a duration of the SWUS.
Clause 69. The first device of any of clauses 61 to 68, wherein the second device uses an implicit technique to determine one or more parameters associated with the SWUS, the sensing signal, or both.
Clause 70. The first device of clause 69, wherein the second device determines the one or more parameters based on a first identifier (ID) of the first device, a second ID of the second device, or a time value indicated by a clock accessible to the second device.
Clause 71. The first device of any of clauses 61 to 70, wherein the at least one processor is further configured to select the first window based on one or more communication intervals associated with communication by one or both of the first device or the second device.
Clause 72. The first device of clause 71, wherein the one or more communication intervals include one or more of a synchronization signal block (SSB), a paging occasion (PO), or a discontinuous reception (DRX) cycle.
Clause 73. The first device of any of clauses 71 to 72, wherein a periodicity of the first window is selected based on an integer multiple of a periodicity of a particular interval of the one or more communication intervals.
Clause 74. The first device of any of clauses 61 to 73, wherein the second device stores multiple configurations for the SWUS corresponding to multiple modes of operation of the second device.
Clause 75. The first device of clause 74, wherein the multiple modes of operation include a radio resource control (RRC) connected mode, an RRC idle mode, and an RRC inactive mode.
Clause 76. The first device of any of clauses 61 to 75, wherein one or both of the first device or the second device operate based on a wireless communication protocol, and wherein the SWUS corresponds to a physical layer (PHY) signal having a level one (L1) signal format associated with a protocol stack specified by the wireless communication protocol.
Clause 77. The first device of any of clauses 61 to 75, wherein one or both of the first device or the second device operate based on a wireless communication protocol, and wherein the SWUS has a layer two (L2) signal format associated with a protocol stack specified by the wireless communication protocol.
Clause 78. The first device of any of clauses 61 to 75, wherein the SWUS has a downlink control information (DCI) signal format.
Clause 79. The first device of any of clauses 61 to 78, wherein the SWUS and the sensing signal have a common signal format.
Clause 80. The first device of any of clauses 61 to 79, wherein the SWUS corresponds to a repetition of the sensing signal having a particular duration and a particular pattern.
Clause 81. The first device of clause 80, wherein the repetition enables the second device to perform a receiver beam refinement operation in connection with reception of the sensing signal.
Clause 82. The first device of any of clauses 61 to 81, wherein the second device transitions from a first mode of operation to a second mode of operation to receive the SWUS.
Clause 83. The first device of clause 82, wherein the first mode corresponds to radio resource control (RRC) idle mode or an RRC inactive mode, and wherein the second mode corresponds to an RRC connected mode.
Clause 84. The first device of any of clauses 82 to 83, wherein the first mode is associated with a first power consumption by the second device, and wherein the second mode is associated with a second power consumption by the second device, the second power consumption greater than the first power consumption.
Clause 85. The first device of any of clauses 82 to 84, wherein, in response to detecting the SWUS, the second device transitions from the second mode to the first mode and operates based on the first mode for an offset time interval.
Clause 86. The first device of clause 85, wherein, after the offset time interval, the second device transitions from the first mode to the second mode to receive the sensing signal.
Clause 87. The first device of any of clauses 61 to 86, wherein the second device initiates operation of a timer in response to detecting the SWUS and monitors for the sensing signal during operation of the timer and until expiration of the timer.
Clause 88. The first device of any of clauses 61 to 87, wherein the first device corresponds to one of a base station, a user equipment (UE), or a wireless relay.
Clause 89. The first device of any of clauses 61 to 88, wherein the second device corresponds to one of a base station, a user equipment (UE), or a wireless relay.
Clause 90. The first device of any of clauses 61 to 89, wherein one or both of the SWUS or the sensing signal correspond to millimeter wave (mmWave) signals associated with a fifth generation new radio (5GNR) wireless communication protocol.
Clause 91. A second device, comprising: a memory; at least one transceiver; and at least one processor communicatively coupled to the memory and the at least one transceiver, the at least one processor configured to: receive, via the at least one transceiver, from a first device by a second device, a sensing wakeup signal (SWUS) during a first window; after receiving the SWUS, receiving, by the second device, a sensing signal during a second window after the first window, wherein receiving the SWUS during the first window indicates to the second device to operate according to an active state to detect the sensing signal during the second window; and transmit, via the at least one transceiver, based on the sensing signal, a response to the sensing signal to the first device.
Clause 92. The second device of clause 91, wherein the at least one processor is further configured to, prior to the first window, receiving one or more configuration messages associated with the SWUS, the sensing signal, or both.
Clause 93. The second device of clause 92, wherein the one or more configuration messages indicate one or more of a duration of the first window, a detection threshold associated with the SWUS, a duration of the SWUS, a periodicity of the first window, or semi-persistent scheduling (SPS) of the SWUS.
Clause 94. The second device of any of clauses 92 to 93, wherein the one or more configuration messages indicate one or more of a duration of the second window, a detection threshold associated with the sensing signal, a duration of the sensing signal, a periodicity of the second window, or semi-persistent scheduling (SPS) of the sensing signal.
Clause 95. The second device of any of clauses 92 to 94, wherein the one or more configuration messages are transmitted to a plurality of devices including the second device.
Clause 96. The second device of any of clauses 92 to 95, wherein the one or more configuration messages explicitly identify one or more parameters associated with the SWUS, the sensing signal, or both.
Clause 97. The second device of any of clauses 92 to 96, wherein the one or more configuration messages indicate a duration of an offset time interval between the first window and the second window.
Clause 98. The second device of clause 97, wherein a duration of the offset time interval is selected based on a duration of the SWUS.
Clause 99. The second device of any of clauses 91 to 98, wherein the second device uses an implicit technique to determine one or more parameters associated with the SWUS, the sensing signal, or both.
Clause 100. The second device of clause 99, wherein the second device determines the one or more parameters based on a first identifier (ID) of the first device, a second ID of the second device, or a time value indicated by a clock accessible to the second device.
Clause 101. The second device of any of clauses 91 to 100, wherein the first window is selected based on one or more communication intervals associated with communication by one or both of the first device or the second device.
Clause 102. The second device of clause 101, wherein the one or more communication intervals include one or more of a synchronization signal block (SSB), a paging occasion (PO), or a discontinuous reception (DRX) cycle.
Clause 103. The second device of any of clauses 101 to 102, wherein a periodicity of the first window is selected based on an integer multiple of a periodicity of a particular interval of the one or more communication intervals.
Clause 104. The second device of any of clauses 91 to 103, wherein the second device stores multiple configurations for the SWUS corresponding to multiple modes of operation of the second device.
Clause 105. The second device of clause 104, wherein the multiple modes of operation include a radio resource control (RRC) connected mode, an RRC idle mode, and an RRC inactive mode.
Clause 106. The second device of any of clauses 91 to 105, wherein the second device communicates with the first device based on a wireless communication protocol, and wherein the SWUS corresponds to a physical layer (PHY) signal having a level one (L1) signal format associated with a protocol stack specified by the wireless communication protocol.
Clause 107. The second device of any of clauses 91 to 105, wherein the second device communicates with the first device based on a wireless communication protocol, and wherein the SWUS has a layer two (L2) signal format associated with a protocol stack specified by the wireless communication protocol.
Clause 108. The second device of any of clauses 91 to 105, wherein the SWUS has a downlink control information (DCI) signal format.
Clause 109. The second device of any of clauses 91 to 108, wherein the SWUS and the sensing signal have a common signal format.
Clause 110. The second device of any of clauses 91 to 109, wherein the SWUS corresponds to a repetition of the sensing signal having a particular duration and a particular pattern.
Clause 111. The second device of clause 110, wherein the repetition enables the second device to perform a receiver beam refinement operation in connection with reception of the sensing signal.
Clause 112. The second device of any of clauses 91 to 111, wherein the second device transitions from a first mode of operation to a second mode of operation to receive the SWUS.
Clause 113. The second device of clause 112, wherein the first mode corresponds to radio resource control (RRC) idle mode or an RRC inactive mode, and wherein the second mode corresponds to an RRC connected mode.
Clause 114. The second device of any of clauses 112 to 113, wherein the first mode is associated with a first power consumption by the second device, and wherein the second mode is associated with a second power consumption by the second device, the second power consumption greater than the first power consumption.
Clause 115. The second device of any of clauses 112 to 114, wherein, in response to detecting the SWUS, the second device transitions from the second mode to the first mode and operates based on the first mode for an offset time interval.
Clause 116. The second device of clause 115, wherein, after the offset time interval, the second device transitions from the first mode to the second mode to receive the sensing signal.
Clause 117. The second device of any of clauses 91 to 116, wherein the second device initiates operation of a timer in response to detecting the SWUS and monitors for the sensing signal during operation of the timer and until expiration of the timer.
Clause 118. The second device of any of clauses 91 to 117, wherein the first device corresponds to one of a base station, a user equipment (UE), or a wireless relay.
Clause 119. The second device of any of clauses 91 to 118, wherein the second device corresponds to one of a base station, a user equipment (UE), or a wireless relay.
Clause 120. The second device of any of clauses 91 to 119, wherein one or both of the SWUS or the sensing signal correspond to millimeter wave (mmWave) signals associated with a fifth generation new radio (5GNR) wireless communication protocol.
Clause 121. An apparatus comprising means for performing a method according to any of clauses 1 to 120.
Clause 122. A non-transitory computer-readable medium storing computer-executable instructions, the computer-executable comprising at least one instruction for causing a computer or processor to perform a method according to any of clauses 1 to 120.

Additional implementation examples are described in the following numbered clauses:
Clause 1. A method of wireless environment sensing performed by a device-equipped target object, comprising: receiving a radio frequency (RF) sensing signal from a transmitter device, the RF sensing signal configured to enable a sensing device to sense target objects in an environment of the sensing device, the target objects including the device equipped target object.
Clause 2. The method of clause 1, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 3. The method of any of clauses 1 to 2, wherein the RF sensing response signal is configured to mimic a reflection of the RF sensing signal, the method further comprising: recording the RF sensing signal and retransmitting the recorded RF sensing signal as the RF sensing response signal after a delay, the delay indicating that the RF sensing response signal is a reflected signal.
Clause 4. The method of any of clauses 1 to 3, wherein the RF sensing response signal is transmitted a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 5. The method of clause 4, wherein the RF sensing response signal is transmitted based on a signal strength measurement of the RF sensing signal being below a threshold.
Clause 6. The method of any of clauses 1 to 5, further comprising: receiving one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 7. The method of any of clauses 1 to 6, further comprising: transmitting one or more configuration parameters for the RF sensing response signal, wherein: the one or more configuration parameters are transmitted to a serving base station of the device-equipped target object, the one or more configuration parameters are transmitted to the sensing device, or any combination thereof.
Clause 8. The method of any of clauses 1 to 7, further comprising: receiving, from the transmitter device, a sensing wakeup signal (SWUS) during a first window, wherein the RF sensing signal is received after the SWUS during a second window after the first window, and wherein reception of the SWUS during the first window indicates to the device-equipped target object to operate according to an active state to detect the RF sensing signal during the second window.
Clause 9. The method of clause 8, further comprising: prior to the first window, receiving one or more configuration messages associated with the SWUS, the RF sensing signal, or both.
Clause 10. The method of clause 9, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 11. The method of any of clauses 8 to 10, further comprising: determining one or more parameters associated with the SWUS, the RF sensing signal, or both based on a first identifier (ID) of the transmitter device, a second ID of the device-equipped target object, or a time value indicated by a clock accessible to the device-equipped target object.
Clause 12. The method of any of clauses 8 to 11, wherein: the first window is selected based on one or more communication intervals associated with communication by one or both of the transmitter device or the device-equipped target object, and the one or more communication intervals include one or more of a synchronization signal block (SSB), a paging occasion (PO), or a discontinuous reception (DRX) cycle.
Clause 13. The method of any of clauses 8 to 12, further comprising: storing multiple configurations for the SWUS corresponding to multiple modes of operation of the device-equipped target object, wherein the multiple modes of operation include a radio resource control (RRC) connected mode, an RRC idle mode, and an RRC inactive mode.
Clause 14. The method of any of clauses 8 to 13, further comprising: communicating with the transmitter device based on a wireless communication protocol, wherein the SWUS corresponds to a physical layer (PHY) signal having a layer one (L1) signal format associated with a protocol stack specified by the wireless communication protocol; or communicating with the transmitter device based on the wireless communication protocol, wherein the SWUS has a layer two (L2) signal format associated with the protocol stack specified by the wireless communication protocol.
Clause 15. The method of any of clauses 8 to 14, wherein the SWUS has a downlink control information (DCI) signal format.
Clause 16. The method of any of clauses 8 to 15, wherein: the SWUS and the RF sensing signal have a common signal format, and the SWUS corresponds to a repetition of the RF sensing signal having a particular duration and a particular pattern.
Clause 17. The method of any of clauses 8 to 16, further comprising: transitioning from a first mode of operation to a second mode of operation to receive the SWUS, wherein the first mode of operation corresponds to a radio resource control (RRC) idle mode or an RRC inactive mode, and wherein the second mode of operation corresponds to an RRC connected mode.
Clause 18. A method of wireless environment sensing performed by a sensing device, comprising: receiving a radio frequency (RF) sensing response signal from a device-equipped target object, the RF sensing response signal configured to enable the sensing device to sense the device-equipped target object in an environment of the sensing device; and detecting a presence of the device-equipped target object in the environment of the sensing device based at least on the RF sensing response signal.
Clause 19. The method of clause 18, further comprising: receiving an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 20. The method of clause 19, wherein the RF sensing response signal is received at least a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 21. The method of any of clauses 19 to 20, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 22. The method of any of clauses 18 to 21, further comprising: receiving one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 23. A method of wireless communication performed by a first device, comprising: transmitting a sensing wakeup signal (SWUS) to a second device during a first window; after transmission of the SWUS, transmitting a radio frequency (RF) sensing signal to the second device during a second window after the first window, wherein transmitting the SWUS during the first window indicates to the second device to operate according to an active state to detect the RF sensing signal during the second window; and receiving a response to the RF sensing signal from the second device.
Clause 24. The method of clause 23, further comprising: prior to the first window, transmitting one or more configuration messages associated with the SWUS, the RF sensing signal, or both.
Clause 25. The method of clause 24, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 26. The method of any of clauses 23 to 25, further comprising: determining one or more parameters associated with the SWUS, the RF sensing signal, or both based on a first identifier (ID) of the first device, a second ID of the second device, or a time value indicated by a clock accessible to the second device.
Clause 27. The method of any of clauses 23 to 26, wherein: the first window is selected based on one or more communication intervals associated with communication by one or both of the first device or the second device, and the one or more communication intervals include one or more of a synchronization signal block (SSB), a paging occasion (PO), or a discontinuous reception (DRX) cycle.
Clause 28. The method of any of clauses 23 to 27, wherein: the SWUS and the RF sensing signal have a common signal format, and the SWUS corresponds to a repetition of the RF sensing signal having a particular duration and a particular pattern.
Clause 29. The method of any of clauses 23 to 28, further comprising: communicating with the second device based on a wireless communication protocol, wherein the SWUS corresponds to a physical layer (PHY) signal having a layer one (L1) signal format associated with a protocol stack specified by the wireless communication protocol; or communicating with the second device based on the wireless communication protocol, wherein the SWUS has a layer two (L2) signal format associated with the protocol stack specified by the wireless communication protocol.
Clause 30. A device-equipped target object, comprising: a memory; at least one transceiver; and at least one processor communicatively coupled to the memory and the at least one transceiver, the at least one processor configured to: receive, via the at least one transceiver, a radio frequency (RF) sensing signal from a transmitter device, the RF sensing signal configured to enable a sensing device to sense target objects in an environment of the sensing device, the target objects including the device equipped target obj ect.
Clause 31. The device-equipped target object of clause 30, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 32. The device-equipped target object of any of clauses 30 to 31, wherein the RF sensing response signal is configured to mimic a reflection of the RF sensing signal, the method further comprising: record the RF sensing signal and retransmitting the recorded RF sensing signal as the RF sensing response signal after a delay, the delay indicating that the RF sensing response signal is a reflected signal.
Clause 33. The device-equipped target object of any of clauses 30 to 32, wherein the RF sensing response signal is transmitted a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 34. The device-equipped target object of clause 33, wherein the RF sensing response signal is transmitted based on a signal strength measurement of the RF sensing signal being below a threshold.
Clause 35. The device-equipped target object of any of clauses 30 to 34, wherein the at least one processor is further configured to: receive, via the at least one transceiver, one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 36. The device-equipped target object of any of clauses 30 to 35, wherein the at least one processor is further configured to: transmit, via the at least one transceiver, one or more configuration parameters for the RF sensing response signal, wherein: the one or more configuration parameters are transmitted to a serving base station of the device-equipped target object, the one or more configuration parameters are transmitted to the sensing device, or any combination thereof.
Clause 37. The device-equipped target object of any of clauses 30 to 36, wherein the at least one processor is further configured to: receive, via the at least one transceiver, from the transmitter device, a sensing wakeup signal (SWUS) during a first window, wherein the RF sensing signal is received after the SWUS during a second window after the first window, and wherein reception of the SWUS during the first window indicates to the device-equipped target object to operate according to an active state to detect the RF sensing signal during the second window.
Clause 38. The device-equipped target object of clause 37, wherein the at least one processor is further configured to: prior to the first window, receiving one or more configuration messages associated with the SWUS, the RF sensing signal, or both.
Clause 39. The device-equipped target object of clause 38, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 40. The device-equipped target object of any of clauses 37 to 39, wherein the at least one processor is further configured to: determine one or more parameters associated with the SWUS, the RF sensing signal, or both based on a first identifier (ID) of the transmitter device, a second ID of the device-equipped target object, or a time value indicated by a clock accessible to the device-equipped target object.
Clause 41. The device-equipped target object of any of clauses 37 to 40, wherein: the first window is selected based on one or more communication intervals associated with communication by one or both of the transmitter device or the device-equipped target object, and the one or more communication intervals include one or more of a synchronization signal block (SSB), a paging occasion (PO), or a discontinuous reception (DRX) cycle.
Clause 42. The device-equipped target object of any of clauses 37 to 41, wherein the at least one processor is further configured to: store multiple configurations for the SWUS corresponding to multiple modes of operation of the device-equipped target object, wherein the multiple modes of operation include a radio resource control (RRC) connected mode, an RRC idle mode, and an RRC inactive mode.
Clause 43. The device-equipped target object of any of clauses 37 to 42, wherein the at least one processor is further configured to: communicate, via the at least one transceiver, with the transmitter device based on a wireless communication protocol, wherein the SWUS corresponds to a physical layer (PHY) signal having a layer one (L1) signal format associated with a protocol stack specified by the wireless communication protocol; or communicate, via the at least one transceiver, with the transmitter device based on the wireless communication protocol, wherein the SWUS has a layer two (L2) signal format associated with the protocol stack specified by the wireless communication protocol.
Clause 44. The device-equipped target object of any of clauses 37 to 43, wherein the SWUS has a downlink control information (DCI) signal format.
Clause 45. The device-equipped target object of any of clauses 37 to 44, wherein: the SWUS and the RF sensing signal have a common signal format, and the SWUS corresponds to a repetition of the RF sensing signal having a particular duration and a particular pattern.
Clause 46. The device-equipped target object of any of clauses 37 to 45, wherein the at least one processor is further configured to: transition from a first mode of operation to a second mode of operation to receive the SWUS, wherein the first mode of operation corresponds to a radio resource control (RRC) idle mode or an RRC inactive mode, and wherein the second mode of operation corresponds to an RRC connected mode.
Clause 47. A sensing device, comprising: a memory; at least one transceiver; and at least one processor communicatively coupled to the memory and the at least one transceiver, the at least one processor configured to: receive, via the at least one transceiver, a radio frequency (RF) sensing response signal from a device-equipped target object, the RF sensing response signal configured to enable the sensing device to sense the device-equipped target object in an environment of the sensing device; and detect a presence of the device-equipped target object in the environment of the sensing device based at least on the RF sensing response signal.
Clause 48. The sensing device of clause 47, wherein the at least one processor is further configured to: receive, via the at least one transceiver, an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 49. The sensing device of clause 48, wherein the RF sensing response signal is received at least a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 50. The sensing device of any of clauses 48 to 49, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 51. The sensing device of any of clauses 47 to 50, wherein the at least one processor is further configured to: receive, via the at least one transceiver, one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 52. A first device, comprising: a memory; at least one transceiver; and at least one processor communicatively coupled to the memory and the at least one transceiver, the at least one processor configured to: transmit, via the at least one transceiver, a sensing wakeup signal (SWUS) to a second device during a first window; after transmission of the SWUS, transmitting a radio frequency (RF) sensing signal to the second device during a second window after the first window, wherein transmitting the SWUS during the first window indicates to the second device to operate according to an active state to detect the RF sensing signal during the second window; and receive, via the at least one transceiver, a response to the RF sensing signal from the second device.
Clause 53. The first device of clause 52, wherein the at least one processor is further configured to: prior to the first window, transmitting one or more configuration messages associated with the SWUS, the RF sensing signal, or both.
Clause 54. The first device of clause 53, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 55. The first device of any of clauses 52 to 54, wherein the at least one processor is further configured to: determine one or more parameters associated with the SWUS, the RF sensing signal, or both based on a first identifier (ID) of the first device, a second ID of the second device, or a time value indicated by a clock accessible to the second device.
Clause 56. The first device of any of clauses 52 to 55, wherein: the first window is selected based on one or more communication intervals associated with communication by one or both of the first device or the second device, and the one or more communication intervals include one or more of a synchronization signal block (SSB), a paging occasion (PO), or a discontinuous reception (DRX) cycle.
Clause 57. The first device of any of clauses 52 to 56, wherein: the SWUS and the RF sensing signal have a common signal format, and the SWUS corresponds to a repetition of the RF sensing signal having a particular duration and a particular pattern.
Clause 58. The first device of any of clauses 52 to 57, wherein the at least one processor is further configured to: communicate, via the at least one transceiver, with the second device based on a wireless communication protocol, wherein the SWUS corresponds to a physical layer (PHY) signal having a layer one (L1) signal format associated with a protocol stack specified by the wireless communication protocol; or communicate, via the at least one transceiver, with the second device based on the wireless communication protocol, wherein the SWUS has a layer two (L2) signal format associated with the protocol stack specified by the wireless communication protocol.
Clause 59. A device-equipped target object, comprising: means for receiving a radio frequency (RF) sensing signal from a transmitter device, the RF sensing signal configured to enable a sensing device to sense target objects in an environment of the sensing device, the target objects including the device equipped target object.
Clause 60. The device-equipped target object of clause 59, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 61. The device-equipped target object of any of clauses 59 to 60, wherein the RF sensing response signal is configured to mimic a reflection of the RF sensing signal, the method further comprising: means for recording the RF sensing signal and retransmitting the recorded RF sensing signal as the RF sensing response signal after a delay, the delay indicating that the RF sensing response signal is a reflected signal.
Clause 62. The device-equipped target object of any of clauses 59 to 61, wherein the RF sensing response signal is transmitted a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 63. The device-equipped target object of clause 62, wherein the RF sensing response signal is transmitted based on a signal strength measurement of the RF sensing signal being below a threshold.
Clause 64. The device-equipped target object of any of clauses 59 to 63, further comprising: means for receiving one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 65. The device-equipped target object of any of clauses 59 to 64, further comprising: means for transmitting one or more configuration parameters for the RF sensing response signal, wherein: the one or more configuration parameters are transmitted to a serving base station of the device-equipped target object, the one or more configuration parameters are transmitted to the sensing device, or any combination thereof.
Clause 66. The device-equipped target object of any of clauses 59 to 65, further comprising: means for receiving, from the transmitter device, a sensing wakeup signal (SWUS) during a first window, wherein the RF sensing signal is received after the SWUS during a second window after the first window, and wherein reception of the SWUS during the first window indicates to the device-equipped target object to operate according to an active state to detect the RF sensing signal during the second window.
Clause 67. The device-equipped target object of clause 66, further comprising: prior to the first window, receiving one or more configuration messages associated with the SWUS, the RF sensing signal, or both.
Clause 68. The device-equipped target object of clause 67, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 69. The device-equipped target object of any of clauses 66 to 68, further comprising: means for determining one or more parameters associated with the SWUS, the RF sensing signal, or both based on a first identifier (ID) of the transmitter device, a second ID of the device-equipped target object, or a time value indicated by a clock accessible to the device-equipped target object.
Clause 70. The device-equipped target object of any of clauses 66 to 69, wherein: the first window is selected based on one or more communication intervals associated with communication by one or both of the transmitter device or the device-equipped target object, and the one or more communication intervals include one or more of a synchronization signal block (SSB), a paging occasion (PO), or a discontinuous reception (DRX) cycle.
Clause 71. The device-equipped target object of any of clauses 66 to 70, further comprising: means for storing multiple configurations for the SWUS corresponding to multiple modes of operation of the device-equipped target object, wherein the multiple modes of operation include a radio resource control (RRC) connected mode, an RRC idle mode, and an RRC inactive mode.
Clause 72. The device-equipped target object of any of clauses 66 to 71, further comprising: means for communicating with the transmitter device based on a wireless communication protocol, wherein the SWUS corresponds to a physical layer (PHY) signal having a layer one (L1) signal format associated with a protocol stack specified by the wireless communication protocol; or means for communicating with the transmitter device based on the wireless communication protocol, wherein the SWUS has a layer two (L2) signal format associated with the protocol stack specified by the wireless communication protocol.
Clause 73. The device-equipped target object of any of clauses 66 to 72, wherein the SWUS has a downlink control information (DCI) signal format.
Clause 74. The device-equipped target object of any of clauses 66 to 73, wherein: the SWUS and the RF sensing signal have a common signal format, and the SWUS corresponds to a repetition of the RF sensing signal having a particular duration and a particular pattern.
Clause 75. The device-equipped target object of any of clauses 66 to 74, further comprising: means for transitioning from a first mode of operation to a second mode of operation to receive the SWUS, wherein the first mode of operation corresponds to a radio resource control (RRC) idle mode or an RRC inactive mode, and wherein the second mode of operation corresponds to an RRC connected mode.
Clause 76. A sensing device, comprising: means for receiving a radio frequency (RF) sensing response signal from a device-equipped target object, the RF sensing response signal configured to enable the sensing device to sense the device-equipped target object in an environment of the sensing device; and means for detecting a presence of the device-equipped target object in the environment of the sensing device based at least on the RF sensing response signal.
Clause 77. The sensing device of clause 76, further comprising: means for receiving an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 78. The sensing device of clause 77, wherein the RF sensing response signal is received at least a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 79. The sensing device of any of clauses 77 to 78, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 80. The sensing device of any of clauses 76 to 79, further comprising: means for receiving one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 81. A first device, comprising: means for transmitting a sensing wakeup signal (SWUS) to a second device during a first window; after transmission of the SWUS, transmitting a radio frequency (RF) sensing signal to the second device during a second window after the first window, wherein transmitting the SWUS during the first window indicates to the second device to operate according to an active state to detect the RF sensing signal during the second window; and means for receiving a response to the RF sensing signal from the second device.
Clause 82. The first device of clause 81, further comprising: prior to the first window, transmitting one or more configuration messages associated with the SWUS, the RF sensing signal, or both.
Clause 83. The first device of clause 82, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 84. The first device of any of clauses 81 to 83, further comprising: means for determining one or more parameters associated with the SWUS, the RF sensing signal, or both based on a first identifier (ID) of the first device, a second ID of the second device, or a time value indicated by a clock accessible to the second device.
Clause 85. The first device of any of clauses 81 to 84, wherein: the first window is selected based on one or more communication intervals associated with communication by one or both of the first device or the second device, and the one or more communication intervals include one or more of a synchronization signal block (SSB), a paging occasion (PO), or a discontinuous reception (DRX) cycle.
Clause 86. The first device of any of clauses 81 to 85, wherein: the SWUS and the RF sensing signal have a common signal format, and the SWUS corresponds to a repetition of the RF sensing signal having a particular duration and a particular pattern.
Clause 87. The first device of any of clauses 81 to 86, further comprising: means for communicating with the second device based on a wireless communication protocol, wherein the SWUS corresponds to a physical layer (PHY) signal having a layer one (L1) signal format associated with a protocol stack specified by the wireless communication protocol; or means for communicating with the second device based on the wireless communication protocol, wherein the SWUS has a layer two (L2) signal format associated with the protocol stack specified by the wireless communication protocol.
Clause 88. A non-transitory computer-readable medium storing computer-executable instructions that, when executed by a device-equipped target object, cause the device-equipped target object to: receive a radio frequency (RF) sensing signal from a transmitter device, the RF sensing signal configured to enable a sensing device to sense target objects in an environment of the sensing device, the target objects including the device equipped target object.
Clause 89. The non-transitory computer-readable medium of clause 88, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 90. The non-transitory computer-readable medium of any of clauses 88 to 89, wherein the RF sensing response signal is configured to mimic a reflection of the RF sensing signal, the method further comprising: record the RF sensing signal and retransmitting the recorded RF sensing signal as the RF sensing response signal after a delay, the delay indicating that the RF sensing response signal is a reflected signal.
Clause 91. The non-transitory computer-readable medium of any of clauses 88 to 90, wherein the RF sensing response signal is transmitted a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 92. The non-transitory computer-readable medium of clause 91, wherein the RF sensing response signal is transmitted based on a signal strength measurement of the RF sensing signal being below a threshold.
Clause 93. The non-transitory computer-readable medium of any of clauses 88 to 92, further comprising computer-executable instructions that, when executed by the device-equipped target object, cause the device-equipped target object to: receive one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 94. The non-transitory computer-readable medium of any of clauses 88 to 93, further comprising computer-executable instructions that, when executed by the device-equipped target object, cause the device-equipped target object to: transmit one or more configuration parameters for the RF sensing response signal, wherein: the one or more configuration parameters are transmitted to a serving base station of the device-equipped target object, the one or more configuration parameters are transmitted to the sensing device, or any combination thereof.
Clause 95. The non-transitory computer-readable medium of any of clauses 88 to 94, further comprising computer-executable instructions that, when executed by the device-equipped target object, cause the device-equipped target object to: receive, from the transmitter device, a sensing wakeup signal (SWUS) during a first window, wherein the RF sensing signal is received after the SWUS during a second window after the first window, and wherein reception of the SWUS during the first window indicates to the device-equipped target object to operate according to an active state to detect the RF sensing signal during the second window.
Clause 96. The non-transitory computer-readable medium of clause 95, further comprising computer-executable instructions that, when executed by the device-equipped target object, cause the device-equipped target object to: prior to the first window, receiving one or more configuration messages associated with the SWUS, the RF sensing signal, or both.
Clause 97. The non-transitory computer-readable medium of clause 96, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 98. The non-transitory computer-readable medium of any of clauses 95 to 97, further comprising computer-executable instructions that, when executed by the device-equipped target object, cause the device-equipped target object to: determine one or more parameters associated with the SWUS, the RF sensing signal, or both based on a first identifier (ID) of the transmitter device, a second ID of the device-equipped target object, or a time value indicated by a clock accessible to the device-equipped target object.
Clause 99. The non-transitory computer-readable medium of any of clauses 95 to 98, wherein: the first window is selected based on one or more communication intervals associated with communication by one or both of the transmitter device or the device-equipped target object, and the one or more communication intervals include one or more of a synchronization signal block (SSB), a paging occasion (PO), or a discontinuous reception (DRX) cycle.
Clause 100. The non-transitory computer-readable medium of any of clauses 95 to 99, further comprising computer-executable instructions that, when executed by the device-equipped target object, cause the device-equipped target object to: store multiple configurations for the SWUS corresponding to multiple modes of operation of the device-equipped target object, wherein the multiple modes of operation include a radio resource control (RRC) connected mode, an RRC idle mode, and an RRC inactive mode.
Clause 101. The non-transitory computer-readable medium of any of clauses 95 to 100, further comprising computer-executable instructions that, when executed by the device-equipped target object, cause the device-equipped target object to: communicate with the transmitter device based on a wireless communication protocol, wherein the SWUS corresponds to a physical layer (PHY) signal having a layer one (L1) signal format associated with a protocol stack specified by the wireless communication protocol; or communicate with the transmitter device based on the wireless communication protocol, wherein the SWUS has a layer two (L2) signal format associated with the protocol stack specified by the wireless communication protocol.
Clause 102. The non-transitory computer-readable medium of any of clauses 95 to 101, wherein the SWUS has a downlink control information (DCI) signal format.
Clause 103. The non-transitory computer-readable medium of any of clauses 95 to 102, wherein: the SWUS and the RF sensing signal have a common signal format, and the SWUS corresponds to a repetition of the RF sensing signal having a particular duration and a particular pattern.
Clause 104. The non-transitory computer-readable medium of any of clauses 95 to 103, further comprising computer-executable instructions that, when executed by the device-equipped target object, cause the device-equipped target object to: transition from a first mode of operation to a second mode of operation to receive the SWUS, wherein the first mode of operation corresponds to a radio resource control (RRC) idle mode or an RRC inactive mode, and wherein the second mode of operation corresponds to an RRC connected mode.
Clause 105. A non-transitory computer-readable medium storing computer-executable instructions that, when executed by a sensing device, cause the sensing device to: receive a radio frequency (RF) sensing response signal from a device-equipped target object, the RF sensing response signal configured to enable the sensing device to sense the device-equipped target object in an environment of the sensing device; and detect a presence of the device-equipped target object in the environment of the sensing device based at least on the RF sensing response signal.
Clause 106. The non-transitory computer-readable medium of clause 105, further comprising computer-executable instructions that, when executed by the sensing device, cause the sensing device to: receive an RF sensing signal from a transmitter device, the RF sensing signal transmitted by the transmitter device to enable the sensing device to detect target objects in the environment of the sensing device, wherein the RF sensing signal is reflected off the device-equipped target object.
Clause 107. The non-transitory computer-readable medium of clause 106, wherein the RF sensing response signal is received at least a threshold period of time after reception of the RF sensing signal, and wherein: the threshold period of time is specific to the device-equipped target object, the threshold period of time varies over time, the threshold period of time is coordinated to avoid interference among other device-equipped target objects or with wireless communication signals, the threshold period of time distinguishes the RF sensing response signal from passive reflections of RF sensing signals transmitted by the transmitter device, the threshold period of time varies over time as a function of an identifier of the device-equipped target object or an identifier of the sensing device, or any combination thereof.
Clause 108. The non-transitory computer-readable medium of any of clauses 106 to 107, wherein the RF sensing response signal is a device-specific RF sensing signal, and one or more of: an identifier of the device-equipped target object is included in the device-specific RF sensing signal, an identifier of the sensing device is included in the device-specific RF sensing signal, or an identifier of the transmitter device is included in the device-specific RF sensing signal.
Clause 109. The non-transitory computer-readable medium of any of clauses 105 to 108, further comprising computer-executable instructions that, when executed by the sensing device, cause the sensing device to: receive one or more configuration parameters for the RF sensing response signal, wherein the one or more configuration parameters comprise: a transmit power control parameter, a signal strength threshold for the RF sensing signal, a delay threshold, one or more occasions during which RF sensing signals are expected to be received, or any combination thereof.
Clause 110. A non-transitory computer-readable medium storing computer-executable instructions that, when executed by a first device, cause the first device to: transmit a sensing wakeup signal (SWUS) to a second device during a first window; after transmission of the SWUS, transmitting a radio frequency (RF) sensing signal to the second device during a second window after the first window, wherein transmitting the SWUS during the first window indicates to the second device to operate according to an active state to detect the RF sensing signal during the second window; and receive a response to the RF sensing signal from the second device.
Clause 111. The non-transitory computer-readable medium of clause 110, further comprising computer-executable instructions that, when executed by the first device, cause the first device to: prior to the first window, transmitting one or more configuration messages associated with the SWUS, the RF sensing signal, or both.
Clause 112. The non-transitory computer-readable medium of clause 111, wherein: the one or more configuration messages indicate one or more of a duration of the first window, a detection threshold associated with the SWUS, a duration of the SWUS, a periodicity of the first window, or semi-persistent scheduling (SPS) of the SWUS, the one or more configuration messages indicate one or more of a duration of the second window, a detection threshold associated with the RF sensing signal, a duration of the RF sensing signal, a periodicity of the second window, or semi-persistent scheduling (SPS) of the RF sensing signal, the one or more configuration messages indicate a duration of an offset time interval between the first window and the second window, a duration of the offset time interval selected based on a duration of the SWUS, or any combination thereof.
Clause 113. The non-transitory computer-readable medium of any of clauses 110 to 112, further comprising computer-executable instructions that, when executed by the first device, cause the first device to: determine one or more parameters associated with the SWUS, the RF sensing signal, or both based on a first identifier (ID) of the first device, a second ID of the second device, or a time value indicated by a clock accessible to the second device.
Clause 114. The non-transitory computer-readable medium of any of clauses 110 to 113, wherein: the first window is selected based on one or more communication intervals associated with communication by one or both of the first device or the second device, and the one or more communication intervals include one or more of a synchronization signal block (SSB), a paging occasion (PO), or a discontinuous reception (DRX) cycle.
Clause 115. The non-transitory computer-readable medium of any of clauses 110 to 114, wherein: the SWUS and the RF sensing signal have a common signal format, and the SWUS corresponds to a repetition of the RF sensing signal having a particular duration and a particular pattern.
Clause 116. The non-transitory computer-readable medium of any of clauses 110 to 115, further comprising computer-executable instructions that, when executed by the first device, cause the first device to: communicate with the second device based on a wireless communication protocol, wherein the SWUS corresponds to a physical layer (PHY) signal having a layer one (L1) signal format associated with a protocol stack specified by the wireless communication protocol; or communicate with the second device based on the wireless communication protocol, wherein the SWUS has a layer two (L2) signal format associated with the protocol stack specified by the wireless communication protocol.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the disclosure has been shown and described with reference to various embodiments thereof, it will be understood by those skilled in the art that various changes in form and details may be made therein without departing from the scope of the disclosure as defined by the appended claims.

## Claims

1. A device-equipped target object (406, 604), comprising:
a memory;
at least one transceiver; and
at least one processor communicatively coupled to the memory and the at least one transceiver, the at least one processor configured to:
receive (620, 710), via the at least one transceiver, a radio frequency, RF, sensing signal from a transmitter device (402, 602), the RF sensing signal configured to enable a sensing device (404, 606) to sense target objects in an environment of the sensing device, the target objects including the device equipped target object; and
transmit (630, 720), via the at least one transceiver, an RF sensing response signal to the sensing device in response to reception of the RF sensing signal, wherein the RF sensing response signal is transmitted after a predetermined time following reception of the RF sensing signal.

2. The device-equipped target object of claim 1, wherein the RF sensing response signal is a device-specific RF sensing signal, and one or more of:
an identifier of the device-equipped target object is included in the device-specific RF sensing signal,
an identifier of the sensing device is included in the device-specific RF sensing signal, or
an identifier of the transmitter device is included in the device-specific RF sensing signal.

3. The device-equipped target object of claim 1, wherein the RF sensing response signal is configured to mimic a reflection of the RF sensing signal, the at least one processor further configured to:
record the RF sensing signal and retransmit, via the at least one transceiver, the recorded RF sensing signal as the RF sensing response signal after a delay, the delay indicating that the RF sensing response signal is a reflected signal.

4. The device-equipped target object of claim 1, wherein:
the threshold period of time is specific to the device-equipped target object,
the threshold period of time varies over time,
the threshold period of time is coordinated to avoid interference among other device-equipped target objects or with wireless communication signals,
the threshold period of time distinguishes the RF sensing response signal from passive reflections of RF sensing signals transmitted by the transmitter device,
the threshold period of time varies over time as a function of an identifier of the device-equipped target object or an identifier of the sensing device, or
any combination thereof.

5. The device-equipped target object of claim 4, wherein the RF sensing response signal is transmitted based on a signal strength measurement of the RF sensing signal being below a threshold.

6. The device-equipped target object of claim 1, wherein the at least one processor is further configured to:
receive, via the at least one transceiver, one or more configuration parameters for the RF sensing response signal, wherein the one or more configuration parameters comprise:
a transmit power control parameter,
a signal strength threshold for the RF sensing signal,
a delay threshold,
one or more occasions during which RF sensing signals are expected to be received, or
any combination thereof.

7. The device-equipped target object of claim 1, wherein the at least one processor is further configured to:
transmit, via the at least one transceiver, one or more configuration parameters for the RF sensing response signal, wherein:
the one or more configuration parameters are transmitted to a serving base station of the device-equipped target object,
the one or more configuration parameters are transmitted to the sensing device, or
any combination thereof.

8. The device-equipped target object of claim 1, wherein the at least one processor is further configured to:
receive, via the at least one transceiver, from the transmitter device, a sensing wakeup signal, SWUS, during a first window,
wherein the RF sensing signal is received after the SWUS during a second window after the first window, and
wherein reception of the SWUS during the first window indicates to the device-equipped target object to operate according to an active state to detect the RF sensing signal during the second window.

9. The device-equipped target object of claim 8, wherein the at least one processor is further configured to:
prior to the first window, receive, via the at least one transceiver, one or more configuration messages associated with the SWUS, the RF sensing signal, or both.

10. The device-equipped target object of claim 8, wherein the at least one processor is further configured to:
determine one or more parameters associated with the SWUS, the RF sensing signal, or both based on a first identifier, ID, of the transmitter device, a second ID of the device-equipped target object, or a time value indicated by a clock accessible to the device-equipped target object.

11. The device-equipped target object of claim 8, wherein:
the first window is selected based on one or more communication intervals associated with communication by one or both of the transmitter device or the device-equipped target object, and
the one or more communication intervals include one or more of a synchronization signal block, SSB, a paging occasion, PO, or a discontinuous reception, DRX, cycle.

12. The device-equipped target object of claim 8, wherein the at least one processor is further configured to:
store multiple configurations for the SWUS corresponding to multiple modes of operation of the device-equipped target object, wherein the multiple modes of operation include a radio resource control, RRC, connected mode, an RRC idle mode, and an RRC inactive mode.

13. A sensing device (404, 606), comprising:
a memory;
at least one transceiver; and
at least one processor communicatively coupled to the memory and the at least one transceiver, the at least one processor configured to:
receive (640), via the at least one transceiver, an RF sensing signal from a transmitter device (402, 602), the RF sensing signal transmitted by the transmitter device to enable the sensing device to detect target objects in the environment of the sensing device;
receive (650, 810), via the at least one transceiver, a radio frequency, RF, sensing response signal from a device-equipped target object (406, 604), the RF sensing response signal configured to enable the sensing device to sense the device-equipped target object in an environment of the sensing device, wherein the RF sensing signal is reflected off the device-equipped target object, wherein the RF sensing response signal is received at least a second threshold period of time after reception of the RF sensing signal; and
detect (660, 820) a presence of the device-equipped target object in the environment of the sensing device based at least on the RF sensing response signal.

14. The sensing device of claim 13, and wherein:
the second threshold period of time is specific to the device-equipped target obj ect,
the second threshold period of time varies over time,
the second threshold period of time is coordinated to avoid interference among other device-equipped target objects or with wireless communication signals,
the second threshold period of time distinguishes the RF sensing response signal from passive reflections of RF sensing signals transmitted by the transmitter device,
the second threshold period of time varies over time as a function of an identifier of the device-equipped target object or an identifier of the sensing device, or
any combination thereof.

15. A method of wireless environment sensing performed by a device-equipped target object (406, 604), comprising:
receiving (620, 710), via at least one transceiver of the device-equipped target object, a radio frequency, RF, sensing signal from a transmitter device (402, 602), the RF sensing signal configured to enable a sensing device (404, 606) to sense target objects in an environment of the sensing device, the target objects including the device equipped target object; and
transmitting (630, 720), via the at least one transceiver, an RF sensing response signal to the sensing device in response to reception of the RF sensing signal, wherein the RF sensing response signal is transmitted after a predetermined time following reception of the RF sensing signal.

## Patentansprüche

1. Ein mit einer Einrichtung ausgestattetes Zielobjekt (406, 604), das Folgendes aufweist:
einen Speicher;
wenigstens einen Transceiver; und
wenigstens einen Prozessor, der kommunikativ an den Speicher und den wenigstens einen Transceiver gekoppelt ist, wobei der wenigstens eine Prozessor konfiguriert ist zum:
Empfangen (620, 710), über den wenigstens einen Transceiver, eines Funkfrequenz- bzw. RF-Messungssignals (RF = radio frequency) von einer Sendereinrichtung (402, 602), wobei das RF-Messungssignals konfiguriert ist zum Aktivieren einer Abfühl- bzw. Messungseinrichtung (404, 606) zum Abfühlen bzw. Messen von Zielobjekten in einer Umgebung der Messungseinrichtung, wobei die Zielobjekte das mit einer Einrichtung ausgestattete Zielobjekt aufweisen; und
Senden (630, 720), über den wenigstens einen Transceiver, eines RF-Messungs-Antwortsignals an die Messungseinrichtung ansprechend auf einen Empfang des RF-Messungssignals, wobei das RF-Messungssignal nach einer vorbestimmten Zeit nachfolgend auf einen Empfang des RF-Messungssignals gesendet wird.

2. Mit einer Einrichtung ausgestattetes Zielobjekt nach Anspruch 1, wobei das RF-Messungs-Antwortsignal ein einrichtungsspezifisches RF-Messungssignals ist, und eines oder mehreres von Folgendem gilt:
ein Identifikator des mit einer Einrichtung ausgestatteten Zielobjektes ist in dem einrichtungsspezifischen RF-Messungssignal enthalten,
ein Identifikator der Messungseinrichtung ist in dem einrichtungsspezifischen RF-Messungssignal enthalten, oder
ein Identifikator der Sendereinrichtung ist in dem einrichtungsspezifischen RF-Messungssignal enthalten.

3. Mit einer Einrichtung ausgestattetes Zielobjekt nach Anspruch 1, wobei das RF-Messungs-Antwortsignal konfiguriert ist zum Imitieren einer Reflexion des RF-Messungssignals, wobei der wenigstens eine Prozessor weiter konfiguriert ist zum:
Aufzeichnen des RF-Messungssignals und erneuten Senden, über den wenigstens einen Transceiver, des aufgezeichneten RF-Messungssignals als das RF-Messungs-Antwortsignal nach einer Verzögerung, wobei die Verzögerung anzeigt, dass das RF-Messungs-Antwortsignal ein reflektiertes Signal ist.

4. Mit einer Einrichtung ausgestattetes Zielobjekt nach Anspruch 1, wobei:
die Schwellenwertzeitperiode spezifisch für das mit einer Einrichtung ausgestattete Zielobjekt ist,
die Schwellenwertzeitperiode über die Zeit variiert,
die Schwellenwertzeitperiode koordiniert wird zum Vermeiden von Interferenz zwischen anderen mit einer Einrichtung ausgestatteten Zielobjekten oder mit Drahtloskommunikationssignalen,
die Schwellenwertzeitperiode das RF-Messungs-Antwortsignal von passiven Reflexionen von RF-Messungssignalen unterscheidet, die durch die Sendereinrichtung gesendet werden,
die Schwellenwertzeitperiode mit der Zeit als eine Funktion eines Identifikators des mit einer Einrichtung ausgestatteten Zielobjektes oder eines Identifikators der Messungseinrichtung variiert, oder
irgendeine Kombination davon.

5. Mit einer Einrichtung ausgestattetes Zielobjekt nach Anspruch 4, wobei das RF-Messungs-Antwortsignal basierend darauf gesendet wird, dass eine Signalstärkenmessung des RF-Messungs-Signals unter einem Schwellenwert ist.

6. Mit einer Einrichtung ausgestattetes Zielobjekt nach Anspruch 1, wobei der wenigstens eine Prozessor weiter konfiguriert ist zum:
Empfangen, über den wenigstens einen Transceiver, von einem oder mehreren Konfigurationsparametern für das RF-Messungs-Antwortsignal, wobei der eine oder die mehreren Konfigurationsparameter Folgendes aufweisen:
einen Sendeleistungssteuerungsparameter,
einen Signalstärkenschwellenwert für das RF-Messungssignal,
einen Verzögerungsschwellenwert,
eine oder mehrere Gelegenheiten, während denen erwartet wird, dass RF-Messungssignale empfangen werden, oder
irgendeine Kombination davon.

7. Mit einer Einrichtung ausgestattetes Zielobjekt nach Anspruch 1, wobei der wenigstens eine Prozessor weiter konfiguriert ist zum:
Senden, über den wenigstens einen Transceiver, von einem oder mehreren Konfigurationsparametern für das RF-Messungs-Antwortsignal, wobei:
der eine oder die mehreren Konfigurationsparameter an eine versorgende Basisstation des mit einer Einrichtung ausgestatteten Zielobjektes gesendet werden,
der eine oder die mehreren Konfigurationsparameter an die Messungseinrichtung gesendet werden,
oder irgendeine Kombination davon.

8. Mit einer Einrichtung ausgestattetes Zielobjekt nach Anspruch 1, wobei der wenigstens eine Prozessor weiter konfiguriert ist zum:
Empfangen, über den wenigstens einen Transceiver, von der Sendereinrichtung, eines Messungs-Aufweck-Signals bzw. SWUS (SWUS = sensing wakeup signal) während eines ersten Fensters,
wobei das RF-Messungssignal nach dem SWUS während eines zweiten Fensters nach dem ersten Fenster empfangen wird, und
wobei ein Empfang des SWUS während des ersten Fensters gegenüber dem mit einer Einrichtung ausgestatteten Zielobjekt anzeigt, gemäß einem aktiven Zustand zu arbeiten, um das RF-Messungssignal während des zweiten Fensters zu detektieren.

9. Mit einer Einrichtung ausgestattetes Zielobjekt nach Anspruch 8, wobei der wenigstens eine Prozessor weiter konfiguriert ist zum:
vor dem ersten Fenster, Empfangen, über den wenigstens einen Transceiver, von einer oder mehreren Konfigurationsnachrichten, die mit dem SWUS assoziiert sind, des RF-Messungssignals oder von beidem.

10. Mit einer Einrichtung ausgestattetes Zielobjekt nach Anspruch 8, wobei der wenigstens eine Prozessor weiter konfiguriert ist zum:
Bestimmen von einem oder mehreren Parametern, die mit dem SWUS assoziiert sind, des RF-Messungssignals oder von beidem basierend auf einem ersten Identifikator bzw. einer ersten ID der Sendereinrichtung, einer zweiten ID des mit einer Einrichtung ausgestatteten Zielobjektes oder eines Zeitwertes, der durch einen Taktgeber bzw. eine Uhr angezeigt wird, auf den bzw. die durch das mit einer Einrichtung ausgestattete Zielobjekt zugegriffen werden kann.

11. Mit einer Einrichtung ausgestattetes Zielobjekt nach Anspruch 8, wobei:
das erste Fenster ausgewählt wird basierend auf einem oder mehreren Kommunikationsintervallen, die assoziiert sind mit Kommunikation durch eines oder beides von der Sendereinrichtung oder dem mit einer Einrichtung ausgestatteten Zielobjekt, und
das eine oder die mehreren Kommunikationsintervalle eines oder mehreres von Folgendem beinhalten: einen Synchronisationssignalblock bzw. SSB (SSB = synchronization signal block), eine Funkrufgelegenheit bzw. PO (PO = paging occasion) oder einen DRX-Zyklus (DRX = discontinuous reception bzw. diskontinuierlicher Empfang).

12. Mit einer Einrichtung ausgestattetes Zielobjekt nach Anspruch 8, wobei der wenigstens eine Prozessor weiter konfiguriert ist zum:
Speichern mehrerer Konfigurationen für das SWUS entsprechend mehreren Betriebsmodi des mit einer Einrichtung ausgestatteten Zielobjektes, wobei die mehreren Betriebsmodi einen Funkressourcensteuerungs- bzw. RRC-Verbunden-Modus (RRC = radio resource control), einen RRC-Ruhe-Modus und einen RRC-Inaktiv-Modus aufweisen.

13. Eine Abfühl- bzw. Messungseinrichtung (404, 606), die Folgendes aufweist:
einen Speicher;
wenigstens einen Transceiver; und
wenigstens einen Prozessor, der kommunikativ an den Speicher und den wenigstens einen Transceiver gekoppelt ist, wobei der wenigstens eine Prozessor konfiguriert ist zum:
Empfangen (640), über den wenigstens einen Transceiver, eines RF-Messungssignals von einer Sendereinrichtung (402, 602), wobei das RF-Messungssignal durch die Sendereinrichtung gesendet wird, um es der Messungseinrichtung zu ermöglichen Zielobjekte in der Umgebung der Messungseinrichtung zu detektieren;
Empfangen (650, 810), über den wenigstens einen Transceiver, eines Funkfrequenz- bzw. RF-Messungs-Antwortsignals (RF = radio frequency) von einem mit einer Einrichtung ausgestatteten Zielobjekt (406, 604), wobei das RF-Messungs-Antwortsignal konfiguriert ist, es der Messungseinrichtung zu ermöglichen das mit einer Einrichtung ausgestattete Zielobjekt in einer Umgebung der Messungseinrichtung zu messen, wobei das RF-Messungssignal von dem mit einer Einrichtung ausgestatteten Zielobjekt reflektiert wird, wobei das RF-Messungs-Antwortsignal wenigstens eine zweite Schwellenwertzeitperiode nach einem Empfang des RF-Messungssignals empfangen wird; und
Detektieren (660, 820) einer Präsenz des mit einer Einrichtung ausgestatteten Zielobjektes in der Umgebung der Messungseinrichtung basierend wenigstens teilweise auf dem RF-Messungs-Antwortsignal.

14. Messungseinrichtung nach Anspruch 13, und wobei:
die zweite Schwellenwertzeitperiode spezifisch für das in einer Einrichtung ausgestattete Zielobjekt ist,
die zweite Schwellenwertzeitperiode über die Zeit variiert,
die zweite Schwellenwertzeitperiode koordiniert wird, um Interferenz zwischen anderen mit einer Einrichtung ausgestatteten Zielobjekten oder mit Drahtloskommunikationssignalen zu vermeiden,
die zweite Schwellenwertzeitperiode das RF-Messungs-Antwortsignal von passiven Reflexionen des RF-Messungssignals unterscheidet, die durch die Sendereinrichtung gesendet werden,
die zweite Schwellenwertzeitperiode über die Zeit als eine Funktion eines Identifikators des mit einer Einrichtung ausgestatteten Zielobjektes oder eines Identifikators der Messungseinrichtung variiert, oder
irgendeine Kombination davon.

15. Ein Verfahren zur Drahtlosumgebungsmessung, das durch ein mit einer Einrichtung ausgestattetes Zielobjekt (406, 604) durchgeführt wird, das Folgendes aufweist:
Empfangen (620, 710), über wenigstens einen Transceiver des mit einer Einrichtung ausgestatteten Zielobjektes, eines Funkfrequenz- bzw. RF-Messungssignals (RF = radio frequency) von einer Sendereinrichtung (402, 602), wobei das RF-Messungssignal konfiguriert ist zum Aktivieren einer Messungseinrichtung (404, 606) zum Messen von Zielobjekten in einer Umgebung der Messungseinrichtung, wobei die Zielobjekte das mit einer Einrichtung ausgestattete Zielobjekt beinhalten; und
Senden (630, 720), über den wenigstens einen Transceiver, eines RF-Messungs-Antwortsignals an die Messungseinrichtung ansprechend auf einen Empfang des RF-Messungssignals, wobei das RF-Messungs-Antwortsignal nach einer vorbestimmten Zeit nachfolgend auf einen Empfang des RF-Messungssignals gesendet wird.

## Revendications

1. Un objet cible équipé d'un dispositif (406, 604), comprenant :
une mémoire,
au moins un émetteur-récepteur, et
au moins un processeur couplé en communication à la mémoire et au au moins un émetteur-récepteur, le au moins un processeur étant configuré de façon à :
recevoir (620, 710), par l'intermédiaire du au moins un émetteur-récepteur, un signal de détection radiofréquence, RF, à partir d'un dispositif émetteur (402, 602), le signal de détection RF étant configuré de façon à permettre à un dispositif de détection (404, 606) de détecter des objets cibles dans un environnement du dispositif de détection, les objets cibles comprenant l'objet cible équipé d'un dispositif, et
transmettre (630, 720), par l'intermédiaire du au moins un émetteur-récepteur, un signal de détection de réponse RF au dispositif de détection en réponse à la réception du signal de détection RF, où le signal de détection de réponse RF est transmis après un temps prédéterminé qui suit la réception du signal de détection RF.

2. L'objet cible équipé d'un dispositif selon la Revendication 1, où le signal de détection de réponse RF est un signal de détection RF spécifique à un dispositif, et une ou plusieurs caractéristiques parmi :
un identifiant de l'objet cible équipé d'un dispositif est inclus dans le signal de détection RF spécifique à un dispositif,
un identifiant du dispositif de détection est inclus dans le signal de détection RF spécifique à un dispositif, ou
un identifiant du dispositif émetteur est inclus dans le signal de détection RF spécifique à un dispositif.

3. L'objet cible équipé d'un dispositif selon la Revendication 1, où le signal de détection de réponse RF est configuré de façon à imiter une réflexion du signal de détection RF, le au moins un processeur étant configuré en outre de façon à :
enregistrer le signal de détection RF et retransmettre, par l'intermédiaire du au moins un émetteur-récepteur, le signal de détection RF enregistré sous la forme du signal de détection de réponse RF après un délai, le délai indiquant que le signal de détection de réponse RF est un signal réfléchi.

4. L'objet cible équipé d'un dispositif selon la Revendication 1, où :
la période temporelle seuil est spécifique à l'objet cible équipé d'un dispositif,
la période temporelle seuil varie au fil du temps,
la période temporelle seuil est coordonnée de façon à éviter une interférence entre d'autres objets cibles équipés d'un dispositif ou avec des signaux de communication sans fil,
la période temporelle seuil distingue le signal de détection de réponse RF de réflexions passives de signaux de détection RF transmis par le dispositif émetteur,
la période temporelle seuil varie au fil du temps sous la forme d'une fonction d'un identifiant de l'objet cible équipé d'un dispositif ou d'un identifiant du dispositif de détection, ou
toute combinaison de ces éléments.

5. L'objet cible équipé d'un dispositif selon la Revendication 4, où le signal de détection de réponse RF est transmis en fonction du fait qu'une mesure d'intensité de signal du signal de détection RF est sous un seuil.

6. L'objet cible équipé d'un dispositif selon la Revendication 1, où le au moins un processeur est configuré en outre de façon à :
recevoir, par l'intermédiaire du au moins un émetteur-récepteur, un ou plusieurs paramètres de configuration pour le signal de détection de réponse RF, où les un ou plusieurs paramètres de configuration comprennent :
un paramètre de commande de puissance de transmission,
un seuil d'intensité de signal pour le signal de détection RF,
un seuil de délai,
une ou plusieurs occasions au cours desquelles on s'attend à recevoir des signaux de détection RF, ou
toute combinaison de ces éléments.

7. L'objet cible équipé d'un dispositif selon la Revendication 1, où le au moins un processeur est configuré en outre de façon à :
transmettre, par l'intermédiaire du au moins un émetteur-récepteur, un ou plusieurs paramètres de configuration pour le signal de détection de réponse RF, où :
les un ou plusieurs paramètres de configuration sont transmis à une station de base de desserte de l'objet cible équipé d'un dispositif,
les un ou plusieurs paramètres de configuration sont transmis au dispositif de détection, ou
toute combinaison de ces éléments.

8. L'objet cible équipé d'un dispositif selon la Revendication 1, où le au moins un processeur est configuré en outre de façon à :
recevoir, par l'intermédiaire du au moins un émetteur-récepteur, à partir du dispositif émetteur, un signal de détection d'éveil, SWUS, au cours d'une première fenêtre,
où le signal de détection RF est reçu après le SWUS au cours d'une deuxième fenêtre après la première fenêtre, et
où la réception du SWUS au cours de la première fenêtre indique à l'objet cible équipé d'un dispositif de fonctionner en fonction d'un état actif de façon à détecter le signal de détection RF au cours de la deuxième fenêtre.

9. L'objet cible équipé d'un dispositif selon la Revendication 8, où le au moins un processeur est configuré en outre de façon à :
avant la première fenêtre, recevoir, par l'intermédiaire du au moins un émetteur-récepteur, un ou plusieurs messages de configuration associés au SWUS, au signal de détection RF ou à ces deux éléments.

10. L'objet cible équipé d'un dispositif selon la Revendication 8, où le au moins un processeur est configuré en outre de façon à :
déterminer un ou plusieurs paramètres associés au SWUS, au signal de détection RF ou à ces deux éléments en fonction d'un premier identifiant, ID, du dispositif émetteur, d'un deuxième ID de l'objet cible équipé d'un dispositif ou d'une valeur temporelle indiquée par une horloge accessible à l'objet cible équipé d'un dispositif.

11. L'objet cible équipé d'un dispositif selon la Revendication 8, où :
la première fenêtre est sélectionnée en fonction d'un ou de plusieurs intervalles de communication associés à une communication par un ou les deux éléments parmi le dispositif émetteur ou l'objet cible équipé d'un dispositif, et
les un ou plusieurs intervalles de communication comprennent un ou plusieurs éléments parmi un bloc de signaux de synchronisation, SSB, une occasion de radiomessagerie, PO, ou un cycle de réception discontinue, DRX.

12. L'objet cible équipé d'un dispositif selon la Revendication 8, où le au moins un processeur est configuré en outre de façon à :
conserver en mémoire une pluralité de configurations pour le SWUS correspondant à une pluralité de modes de fonctionnement de l'objet cible équipé d'un dispositif, où la pluralité de modes de fonctionnement comprend un mode connecté de commande de ressource radio, RRC, un mode en veille RRC et un mode inactif RRC.

13. Un dispositif de détection (404, 606), comprenant :
une mémoire,
au moins un émetteur-récepteur, et
au moins un processeur couplé en communication à la mémoire et au au moins un émetteur-récepteur, le au moins un processeur étant configuré de façon à :
recevoir (640), par l'intermédiaire du au moins un émetteur-récepteur, un signal de détection RF à partir d'un dispositif émetteur (402, 602), le signal de détection RF étant transmis par le dispositif émetteur de façon à permettre au dispositif de détection de détecter des objets cibles dans l'environnement du dispositif de détection,
recevoir (650, 810), par l'intermédiaire du au moins un émetteur-récepteur, un signal de détection de réponse radiofréquence, RF, à partir d'un objet cible équipé d'un dispositif (406, 604), le signal de détection de réponse RF étant configuré de façon à permettre au dispositif de détection de détecter l'objet cible équipé d'un dispositif dans un environnement du dispositif de détection, où le signal de détection RF est réfléchi à partir de l'objet cible équipé d'un dispositif, où le signal de détection de réponse RF est reçu au moins une deuxième période temporelle seuil après la réception du signal de détection RF, et
détecter (660, 820) une présence de l'objet cible équipé d'un dispositif dans l'environnement du dispositif de détection en fonction au moins du signal de détection de réponse RF.

14. Le dispositif de détection selon la Revendication 13, et où :
la deuxième période temporelle seuil est spécifique à l'objet cible équipé d'un dispositif,
la deuxième période temporelle seuil varie au fil du temps,
la deuxième période temporelle seuil est coordonnée de façon à éviter une interférence entre d'autres objets cibles équipés d'un dispositif ou avec des signaux de communication sans fil,
la deuxième période temporelle seuil distingue le signal de détection de réponse RF de réflexions passives de signaux de détection RF transmis par le dispositif émetteur,
la deuxième période temporelle seuil varie au fil du temps sous la forme d'une fonction d'un identifiant de l'objet cible équipé d'un dispositif ou d'un identifiant du dispositif de détection, ou
toute combinaison de ces éléments.

15. Un procédé de détection d'un environnement sans fil exécuté par un objet cible équipé d'un dispositif (406, 604), comprenant :
la réception (620, 710), par l'intermédiaire d'au moins un émetteur-récepteur de l'objet cible équipé d'un dispositif, d'un signal de détection radiofréquence, RF, à partir d'un dispositif émetteur (402,602), le signal de détection RF étant configuré de façon à permettre à un dispositif de détection (404, 606) de détecter des objets cibles dans un environnement du dispositif de détection, les objets cibles comprenant l'objet cible équipé d'un dispositif, et
la transmission (630, 720), par l'intermédiaire du au moins un émetteur-récepteur, d'un signal de détection de réponse RF au dispositif de détection en réponse à la réception du signal de détection RF, où le signal de détection de réponse RF est transmis après un temps prédéterminé qui suit la réception du signal de détection RF.
